(19) Europäisches Patentamt / European Patent Office / Office européen des brevets

(11) **EP 4 418 569 A1**

(12) **EUROPEAN PATENT APPLICATION**

(43) Date of publication:
   **21.08.2024 Bulletin 2024/34**

(21) Application number: **24155835.2**

(22) Date of filing: **05.02.2024**

(51) International Patent Classification (IPC):
   **H04B 10/079** (2013.01)    **G01M 11/00** (2006.01)
   **H04B 10/2569** (2013.01)

(52) Cooperative Patent Classification (CPC):
   **H04B 10/07953; G01M 11/337; H04B 10/2569**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH MA MD TN**

(30) Priority: **20.02.2023 US 202363485972 P
         29.08.2023 US 202363579352 P**

(71) Applicant: **EXFO Inc.
   Québec, QC G1M 2K2 (CA)**

(72) Inventor: **HE, Gang
   Québec, G1M 2K2 (CA)**

(74) Representative: **Gregory, Alexandra Louise et al
   Venner Shipley LLP
   5 Stirling House
   Surrey Research Park
   Stirling Road
   Guildford GU2 7XH (GB)**

(54) **METHODS AND SYSTEMS FOR CHARACTERIZATION OF POLARIZATION-DEPENDENT LOSS OR GAIN IN OPTICAL LINKS AND COMPONENTS**

(57)    Methods and systems are disclosed for characterizing a polarization-dependent loss or gain (PDL/G) of an optical device under test (DUT), such as an optical fiber link, from an optical signal having passed through the optical DUT. The optical signal is substantially unpolarized upon entering the optical DUT. The method can include varying a state of polarization (SOP) of the optical signal over a plurality of sampled SOP conditions to produce a respective plurality of SOP-varied optical signals; performing a polarization-analysis and detection operation on the plurality of SOP-varied optical signals to acquire a respective plurality of detected signal sets, each detected signal set including at least one polarization-analyzed detected signal; and determining, as the PDL/G of the optical DUT, a polarization extinction ratio parameter representative of a ratio of maximum to minimum power levels measured among the polarization-analyzed detected signals of the plurality of detected signal sets.

FIG. 2

EP 4 418 569 A1

## Description

### TECHNICAL FIELD

The technical field generally relates to optical signal characterization in telecommunication applications, and more particularly, to methods and systems for characterizing polarization-dependent loss or gain (PDL/G) in optical links and components.

### BACKGROUND

Polarization-dependent loss or gain (PDL/G) is a measure of the peak-to-peak variation in insertion loss or gain of an optical device under test (DUT), for example, an optical link or component, due to changes in the state of polarization (SOP) of an optical signal transmitted through the device. Characterization of PDL/G in optical fiber communication systems is important due to its adverse effects on optical signals, such as signal distortion, attenuation, and loss. In long-haul terrestrial or submarine optical fiber transmission links in which hundreds optical components are concatenated, the PDL/G accumulated along the link can result in polarization-dependent power fluctuations, which can degrade system performance and cause instability or even failure. The accumulated PDL/G of the link depends on the PDL/G of its individual components and the PDL/G resulting from the inter-component coupling. Both of these PDL/G contributions can vary as a function of wavelength and time. Various PDL/G characterization techniques have been developed over the years. While these techniques may have certain advantages, they also have certain limitations. Non-limiting examples of such limitations include control requirements over the optical signals at both ends of the DUT, insufficient accuracy in PDL/G determination, limited range for spectrally resolved measurements, and sensitivity to non-polarization-dependent power and PDL/G variations within measurement times. Challenges therefore remain in the field of PDL/G characterization techniques.

### SUMMARY

The present description generally relates to methods and systems for characterizing PDL/G in optical communication links, for example, optical fiber links, as well as other optical components.

In accordance with an aspect, there is provided a method of characterizing a polarization-dependent loss or gain (PDL/G) of an optical device under test (DUT) from an optical signal having passed through the optical DUT, wherein the optical signal is substantially unpolarized upon entering the optical DUT, the method including:

varying a state of polarization (SOP) of the optical signal over a plurality of sampled SOP conditions to produce a respective plurality of SOP-varied optical signals;
performing a polarization-analysis and detection operation on the plurality of SOP-varied optical signals to acquire a respective plurality of detected signal sets, each detected signal set including at least one polarization-analyzed detected signal; and
determining, as the PDL/G of the optical DUT, a polarization extinction ratio (PER) parameter representative of a ratio of maximum to minimum optical power levels measured among the polarization-analyzed detected signals of the plurality of detected signal sets.

In some embodiments, the optical DUT includes an optical communication link with a plurality of optical components distributed therealong. In some embodiments, the optical signal is a polarization- and wavelength-division-multiplexed (PWDM) signal.
In some embodiments, the optical signal has a spectral bandwidth lying within a wavelength band ranging from about 1250 nm to about 1650 nm. In some embodiments, the optical signal has a spectral bandwidth having a width ranging from about 35 nm to about 100 nm. In some embodiments, the optical signal has a spectral bandwidth having a width ranging from about 0.01 nm to about 0.1 nm.
In some embodiments, a number of the plurality of sampled SOP conditions ranges from about 50 to about 500. In some embodiments, the plurality of sampled SOP conditions are substantially uniformly distributed on the Poincaré sphere. In some embodiments, the plurality of sampled SOP conditions are nonuniformly distributed on the Poincaré sphere.
In some embodiments, wherein varying the SOP of the optical signal over the plurality of sampled SOP conditions includes selecting the plurality of sampled SOP conditions deterministically. In some embodiments, varying the SOP of the optical signal over the plurality of sampled SOP conditions includes selecting the plurality of sampled SOP conditions randomly. In some embodiments, the optical signal is varied between successive ones of the plurality of sampled SOP conditions over a time scale ranging from about 10 milliseconds to about 200 milliseconds.

In some embodiments:

the polarization-analysis and detection operation includes, for each SOP-varied optical signal:

splitting, with a polarizing beam splitter, the SOP-varied optical signal into a first polarization-analyzed signal component having a first analyzed SOP condition and a second polarization-analyzed signal component having a second analyzed SOP condition different from the first analyzed SOP condition;
detecting, using a first detection channel of a dual-channel optical detector, the first polarization-analyzed signal component as a first one of the at least one polarization-analyzed detected signal of the respective detected signal set; and
detecting, using a second detection channel of the dual-channel optical detector, the second polarization-analyzed signal component as a second one of the at least one polarization-analyzed detected signal of the respective detected signal set; and

the PER parameter is determined from the plurality of first polarization-analyzed detected signals and the plurality of second polarization-analyzed detected signals.

In some embodiments, the first analyzed SOP condition and the second analyzed SOP condition are orthogonal to each other.

In some embodiments, determining the PER parameter includes:

computing a plurality of polarization-analyzed power ratio signals using the plurality of detected signal sets, the plurality of polarization-analyzed power ratio signals including a plurality of first power ratio signals and/or a plurality of second power ratio signals, wherein each first power ratio signal corresponds to a power ratio of the first polarization-analyzed detected signal to the second polarization-analyzed detected signal of the respective detected signal set, and wherein each second power ratio signal corresponds to a power ratio of the second polarization-analyzed detected signal to the first polarization-analyzed detected signal of the respective detected signal set;
identifying at least one extremum power ratio signal from the plurality of polarization-analyzed power ratio signals; and
determining the PER parameter from the at least one extremum power ratio signal.

In some embodiments, determining the PER parameter includes:

computing a plurality of transmittance power ratio signals using the plurality of detected signal sets, the plurality of transmittance power ratio signals including a plurality of first power ratio signals and/or a plurality of second power ratio signals, wherein each first power ratio signal corresponds to a ratio of the first polarization-analyzed detected signal to the sum of the first polarization-analyzed detected signal and the second polarization-analyzed detected signal of the respective detected signal set, and wherein each second power ratio signal corresponds to a ratio of the second polarization-analyzed detected signal to the sum of the first polarization-analyzed detected signal and the second polarization-analyzed detected signal of the respective detected signal set;
identifying at least one extremum power ratio signal from the plurality of transmittance power ratio signals; and
determining the PER parameter from the at least one extremum power ratio signal.

In some embodiments, determining the PER parameter includes:

determining a polarization-dependent imbalance between the first detection channel and the second detection channel; and
computing the PER parameter from the plurality of first polarization-analyzed detected signals and the plurality of second polarization-analyzed detected signals while compensating at least partly for the polarization-dependent imbalance.

In some embodiments:

the polarization-analysis and detection operation includes, for each SOP-varied optical signal:

splitting, with a non-polarizing beam splitter, the SOP-varied optical signal into a first signal component and a second signal component;
producing, with a polarizer, a polarization-analyzed signal component having an analyzed SOP condition from the first signal component, wherein the analyzed SOP condition is the same for all the SOP-varied optical signals;

detecting, using a first detection channel of a dual-channel optical detector, the polarization-analyzed signal component as a single one of the at least one polarization-analyzed detected signal of the respective detected signal set; and

detecting, using a second detection channel of the dual-channel optical detector, the second signal component as a non-polarization-analyzed detected signal of the respective detected signal set; and

determining the PER parameter includes:

normalizing, in each detected signal set, the single polarization-analyzed detected signal using the non-polarization-analyzed detected signal to produce one a plurality of normalized polarization-analyzed detected signals; identifying a maximum ratio signal and a minimum ratio signal from the plurality of polarization-analyzed power ratio signals; and

determining the PER parameter from the maximum ratio signal and the minimum ratio signal.

In some embodiments:

the polarization-analyzed detected signals correspond to polarization-analyzed optical power spectra measured over a detection spectral range; and

the PER parameter is determined as a PER spectrum from the polarization-analyzed optical power spectra on a wavelength-by-wavelength basis for a number of wavelengths within the detection spectral range, wherein a magnitude of the PER spectrum at a given one of the wavelengths is representative of a ratio of maximum to minimum optical power levels detected among the polarization-analyzed optical power spectra at the given wavelength.

In accordance with another aspect, there is provided a system for characterizing a polarization-dependent loss or gain (PDL/G) of an optical device under test (DUT) from an optical signal having passed through the optical DUT, wherein the optical signal is substantially unpolarized upon entering the optical DUT, the system including:

a polarization controller configured to receive the optical signal from the optical DUT and vary a state of polarization (SOP) of the optical signal over a plurality of sampled SOP conditions to produce a respective plurality of SOP-varied optical signals;

a polarization-analysis and detection apparatus configured to acquire, from the plurality of SOP-varied optical signals, a respective plurality of detected signal sets, each detected signal set including at least one polarization-analyzed detected signal; and

a computer device operatively coupled to the polarization-analysis and detection apparatus, the computer device including a processor and a computer readable storage medium having stored thereon computer readable instructions that, when executed by the processor, cause the processor to determine, as the PDL/G of the optical DUT, a polarization extinction ratio (PER) parameter representative of a ratio of maximum to minimum optical power levels measured among the polarization-analyzed detected signals of the plurality of detected signal sets.

In some embodiments, the method further includes a light source configured to generate the optical signal in the substantially unpolarized state for injection into the optical DUT, wherein the light source is configured to generate the optical signal as a polarization- and wavelength-division-multiplexed (PWDM) signal having a spectral bandwidth lying within a wavelength band ranging from about 1250 nm to about 1650 nm.

In some embodiments, the spectral bandwidth of the optical signal has a width ranging from about 35 nm to about 100 nm.

In some embodiments, the spectral bandwidth of the optical signal has a width ranging from about 0.01 nm to about 0.1 nm.

In some embodiments, the light source is configured to generate the optical signal as a polarization- and wavelength-division-multiplexed (PWDM) signal.

In some embodiments, a number of the plurality of sampled SOP conditions ranges from about 50 to about 500.

In some embodiments, the polarization controller is configured to select the plurality of sampled SOP conditions to be substantially uniformly distributed on the Poincaré sphere. In some embodiments, the polarization controller is configured to select the plurality of sampled SOP conditions to be nonuniformly distributed on the Poincaré sphere. In some embodiments, the polarization controller is configured to select the plurality of sampled SOP conditions deterministically. In some embodiments, the polarization controller is configured to select the plurality of sampled SOP conditions randomly. In some embodiments, the polarization controller is configured to vary the SOP of the optical signal between successive ones of the plurality of sampled SOP conditions over a time scale ranging from about 10 milliseconds to about 200 milliseconds.

In some embodiments:

the polarization-analysis and detection apparatus includes:

a polarizing beam splitter configured to split each SOP-varied optical signal into a first polarization-analyzed signal component having a first analyzed SOP condition and a second polarization-analyzed signal component having a second analyzed SOP condition different from the first analyzed SOP condition, wherein the first analyzed SOP condition and the second analyzed SOP condition are orthogonal to each other; and
a dual-channel optical detector including:

a first detection channel configured to detect the first polarization-analyzed signal component associated with each SOP-varied optical signal as a first one of the at least one polarization-analyzed detected signal of the respective detected signal set, thereby acquiring a plurality of first polarization-analyzed detected signals; and
a second detection channel configured to detect the second polarization-analyzed signal component associated with each SOP-varied optical signal as a second one of the at least one polarization-analyzed detected signal of the respective detected signal set, thereby acquiring a plurality of second polarization-analyzed detected signals; and

the processor is configured to determine the PER parameter from the plurality of first polarization-analyzed detected signals and the plurality of second polarization-analyzed detected signals.

In some embodiments, the processor is configured to determine the PER parameter by:

computing a plurality of polarization-analyzed power ratio signals using the plurality of detected signal sets, the plurality of polarization-analyzed power ratio signals including a plurality of first power ratio signals and/or a plurality of second power ratio signals, wherein each first power ratio signal corresponds to a power ratio of the first polarization-analyzed detected signal to the second polarization-analyzed detected signal of the respective detected signal set, and wherein each second power ratio signal corresponds to a power ratio of the second polarization-analyzed detected signal to the first polarization-analyzed detected signal of the respective detected signal set;
identifying at least one extremum power ratio signal from the plurality of polarization-analyzed power ratio signals; and
determining the PER parameter from the at least one extremum power ratio signal.

In some embodiments, the processor is configured to determine the PER parameter by:

computing a plurality of transmittance power ratio signals using the plurality of detected signal sets, the plurality of transmittance power ratio signals including a plurality of first power ratio signals and/or a plurality of second power ratio signals, wherein each first power ratio signal corresponds to a ratio of the first polarization-analyzed detected signal to the sum of the first polarization-analyzed detected signal and the second polarization-analyzed detected signal of the respective detected signal set, and wherein each second power ratio signal corresponds to a ratio of the second polarization-analyzed detected signal to the sum of the first polarization-analyzed detected signal and the second polarization-analyzed detected signal of the respective detected signal set;
identifying at least one extremum power ratio signal from the plurality of transmittance power ratio signals; and
determining the PER parameter from the at least one extremum power ratio signal.

In some embodiments, the processor is configured to determine the PER parameter by:

determining a polarization-dependent imbalance between the first detection channel and the second detection channel; and
computing the PER parameter from the plurality of first polarization-analyzed detected signals and the plurality of second polarization-analyzed detected signals while compensating at least partly for the polarization-dependent imbalance.

In some embodiments:

the polarization-analysis and detection apparatus includes:

a non-polarizing beam splitter configured to split each SOP-varied optical signal into a first signal component and a second signal component;

a polarizer configured to produce, from the first signal component associated with each SOP-varied optical signal, a polarization-analyzed signal component having an analyzed SOP condition; and

a dual-channel optical detector including:

a first detection channel configured to detect the polarization-analyzed signal component associated with each SOP-varied optical signal as a single one of the at least one polarization-analyzed detected signal of the respective detected signal set; and

a second detection channel configured to detect the second signal component associated with each SOP-varied optical signal as a non-polarization-analyzed detected signal of the respective detected signal set; and

the processor is configured to determine the PER parameter by:

normalizing, in each detected signal set, the single polarization-analyzed detected signal using the non-polarization-analyzed detected signal, thereby producing a plurality of normalized polarization-analyzed detected signals;

identifying a maximum ratio signal and a minimum ratio signal from the plurality of polarization-analyzed power ratio signals; and

determining the PER parameter from the maximum ratio signal and the minimum ratio signal.

In some embodiments, the polarization-analysis and detection apparatus includes a spectrally-sensitive optical detector configured to acquire the plurality of detected signal sets in a spectrally resolved manner.

In some embodiments:

the spectrally-sensitive optical detector is configured to acquire the polarization-analyzed detected signals as polarization-analyzed optical power spectra over a detection spectral range; and

the processor is configured to determine the PER parameter as a PER spectrum from the polarization-analyzed optical power spectra on a wavelength-by-wavelength basis for a number of wavelengths within the detection spectral range, wherein a magnitude of the PER spectrum at a given one of the wavelengths is representative of a ratio of maximum to minimum optical power levels detected among the polarization-analyzed optical power spectra at the given wavelength.

In accordance with another aspect, there is provided a computer program comprising instructions that, when executed by a processor, cause the processor to perform a method of characterizing a polarization-dependent loss or gain (PDL/G) of an optical device under test (DUT) from an optical signal having passed through the optical DUT, wherein the optical signal is substantially unpolarized upon entering the optical DUT, the method including:

controlling a polarization controller to receive the optical signal from the optical DUT and vary a state of polarization (SOP) of the optical signal over a plurality of sampled SOP conditions to produce a respective plurality of SOP-varied optical signals;

controlling a polarization-analysis and detection apparatus to perform a polarization-analysis and detection operation on the plurality of SOP-varied optical signals to acquire a respective plurality of detected signal sets, each detected signal set including at least one polarization-analyzed detected signal; and

determining, as the PDL/G of the optical DUT, a polarization extinction ratio (PER) parameter representative of a ratio of maximum to minimum optical power levels measured among the polarization-analyzed detected signals of the plurality of detected signal sets.

In accordance with another aspect, there is provided a method of characterizing a polarization-dependent loss or gain (PDL/G) of an optical device under test (DUT) from an optical signal having passed through the optical DUT, wherein the optical signal is substantially unpolarized upon entering the optical DUT, the method including:

varying a state of polarization (SOP) of the optical signal over a plurality of sampled SOP conditions to produce a respective plurality of SOP-varied optical signals;

performing a polarization-analysis and detection operation on the plurality of SOP-varied optical signals to acquire a respective plurality of detected signal sets, each detected signal set including at least one polarization-analyzed detected signal; and

determining, as the PDL/G of the optical DUT, a polarization extinction ratio (PER) parameter representative of a ratio of maximum to minimum optical power levels measured among the polarization-analyzed detected signals of the plurality of detected signal sets.

In accordance with another aspect, there is provided a system for characterizing a polarization-dependent loss or gain (PDL/G) of an optical device under test (DUT) from an optical signal having passed through the optical DUT, wherein the optical signal is substantially unpolarized upon entering the optical DUT, the system including:

a polarization controller configured to receive the optical signal from the optical DUT and vary a state of polarization (SOP) of the optical signal over a plurality of sampled SOP conditions to produce a respective plurality of SOP-varied optical signals;
a polarization-analysis and detection apparatus configured to acquire, from the plurality of SOP-varied optical signals, a respective plurality of detected signal sets, each detected signal set including at least one polarization-analyzed detected signal; and
a computer device operatively coupled to the polarization-analysis and detection apparatus, the computer device including a processor and a computer readable storage medium having stored thereon computer readable instructions that, when executed by the processor, cause the processor to determine, as the PDL/G of the optical DUT, a polarization extinction ratio (PER) parameter representative of a ratio of maximum to minimum optical power levels measured among the polarization-analyzed detected signals of the plurality of detected signal sets.

In accordance with another aspect, there is provided a non-transitory computer readable storage medium having stored thereon computer readable instructions that, when executed by a processor, cause the processor to perform a method of characterizing a polarization-dependent loss or gain (PDL/G) of an optical device under test (DUT) from an optical signal having passed through the optical DUT, wherein the optical signal is substantially unpolarized upon entering the optical DUT, the method including:

controlling a polarization controller to receive the optical signal from the optical DUT and vary a state of polarization (SOP) of the optical signal over a plurality of sampled SOP conditions to produce a respective plurality of SOP-varied optical signals;
controlling a polarization-analysis and detection apparatus to perform a polarization-analysis and detection operation on the plurality of SOP-varied optical signals to acquire a respective plurality of detected signal sets, each detected signal set including at least one polarization-analyzed detected signal; and
determining, as the PDL/G of the optical DUT, a polarization extinction ratio (PER) parameter representative of a ratio of maximum to minimum optical power levels measured among the polarization-analyzed detected signals of the plurality of detected signal sets.

In accordance with another aspect, there is provided a computer device including a processor and a non-transitory computer readable storage medium as disclosed herein, the non-transitory computer readable storage medium being operatively coupled to the processor.
In accordance with another aspect, there is provided a method of characterizing a polarization-dependent loss or gain (PDL/G) spectrum of an optical device under test (DUT) from an optical signal having passed through the optical DUT, wherein the optical signal is substantially unpolarized upon entering the optical DUT, the method including:

varying a state of polarization (SOP) of the optical signal over a plurality of sampled SOP conditions to produce a respective plurality of SOP-varied optical signals;
splitting each SOP-varied optical signal into a first polarization-analyzed signal component having a first analyzed SOP condition and a second polarization-analyzed signal component having a second analyzed SOP condition different from the first analyzed SOP condition, wherein the first analyzed SOP condition and the second analyzed SOP condition are the same for all the SOP-varied optical signals;
detecting each first polarization-analyzed signal component as a respective one of a plurality of first polarization-analyzed optical power spectra;
detecting each second polarization-analyzed signal component as a respective one of a plurality of second polarization-analyzed optical power spectra; and
determining the PDL/G spectrum of the optical DUT on a wavelength-by-wavelength basis for a number of wavelengths within a specified spectral range, wherein a magnitude of the PDL/G spectrum at a given wavelength is representative of a ratio of maximum to minimum optical power levels detected among the plurality of first polarization-analyzed optical power spectra and the plurality of second polarization-analyzed optical power spectra.

In accordance with another aspect, there is provided a system for characterizing a polarization-dependent loss or gain (PDL/G) spectrum of an optical device under test (DUT) from an optical signal having passed through the optical DUT, wherein the optical signal is substantially unpolarized upon entering the optical DUT, the system including:

> a polarization controller configured to receive the optical signal from the optical DUT and vary a state of polarization (SOP) of the optical signal over a plurality of sampled SOP conditions to produce a respective plurality of SOP-varied optical signals;
>
> a polarizing beam splitter configured to split each SOP-varied optical signal into a first polarization-analyzed signal component having a first analyzed SOP condition and a second polarization-analyzed signal component having a second analyzed SOP condition different from the first analyzed SOP condition, wherein the first analyzed SOP condition and the second analyzed SOP condition are the same for all the SOP-varied optical signals;
>
> a dual-channel spectrally resolved optical detector including:
>
> > a first detection channel configured to detect the first polarization-analyzed signal component associated with each SOP-varied optical signal as a respective one of a plurality of first polarization-analyzed optical power spectra; and
> >
> > a second detection channel configured to detect the second polarization-analyzed signal component associated with each SOP-varied optical signal as a respective one of a plurality of second polarization-analyzed optical power spectra; and
>
> a computer device operatively coupled to the dual-channel spectrally resolved optical detector, the computer device including a processor and a computer readable storage medium having stored thereon computer readable instructions that, when executed by the processor, cause the processor to determine the PDL/G spectrum of the optical DUT on a wavelength-by-wavelength basis for a number of wavelengths within a specified spectral range, wherein a magnitude of the PDL/G spectrum at a given wavelength is representative of a ratio of maximum to minimum optical power levels detected among the plurality of first polarization-analyzed optical power spectra and the plurality of second polarization-analyzed optical power spectra.

Other method and process steps may be performed before, during, or after the steps described herein. The order of one or more steps may also differ, and some of the steps may be omitted, repeated, and/or combined, as the case may be. It is also to be noted that some steps may be performed using various analysis and processing techniques, which may be implemented in hardware, software, firmware, or any combination thereof.

Other objects, features, and advantages of the present description will become more apparent upon reading of the following non-restrictive description of specific embodiments thereof, given by way of example only with reference to the appended drawings. Although specific features described in the above summary and in the detailed description below may be described with respect to specific embodiments or aspects, it should be noted that these specific features may be combined with one another unless stated otherwise.

**BRIEF DESCRIPTION OF THE DRAWINGS**

Fig. 1 is a flow diagram of a method of characterizing a PDL/G of an optical DUT, in accordance with an embodiment.

Fig. 2 is a schematic representation of a system for characterizing a PDL/G of an optical DUT, in accordance with another embodiment.

Fig. 3 is a schematic representation of a system for characterizing a PDL/G of an optical DUT, in accordance with another embodiment.

Fig. 4 is a schematic representation of a system for characterizing a PDL/G of an optical DUT, in accordance with another embodiment.

Fig. 5 is a schematic representation of a system for characterizing a PDL/G of an optical DUT, in accordance with another embodiment.

Fig. 6 is a schematic representation of a system for characterizing a PDL/G of an optical DUT, in accordance with another embodiment.

## DETAILED DESCRIPTION

The present description generally relates to techniques for characterizing polarization-dependent loss or gain (PDL/G) in various types of optical devices and equipment, including optical communication links (e.g., fiber-optic communication networks) and individual optical components (e.g., isolators, couplers). The disclosed techniques may be useful in various applications where PDL/G characterization is desired or required. For example, in some embodiments, the disclosed techniques can be implemented in various types of optical communication networks including, without limitation, metro, long-haul, and submarine systems using signal modulation schemes in the ITU grid, such as QPSK or M-QAM (where M can be, for example, 16, 32, 64, 128 or 256) at 28 Gb/s and higher rates. The disclosed techniques may be used to ensure or help ensure that an optical network is reliable and operates within acceptable industry specifications. The disclosed techniques can be implemented in various environments and settings, including field-deployed networks, manufacturing facilities for network equipment, research and development laboratories, data centers, and the like. Furthermore, the disclosed techniques can be employed during the installation, activation and/or operation phases of an optical communication network for characterization, maintenance, error diagnosis and troubleshooting, and/or monitoring. Depending on the application, the disclosed techniques can be used with portable or fixed test instruments.

The terms "light" and "optical", and variants and derivatives thereof, refer herein to radiation in any appropriate region of the electromagnetic spectrum. These terms are not limited to visible light, but may also include invisible regions of the electromagnetic spectrum including, without limitation, the terahertz (THz), infrared (IR), and ultraviolet (UV) spectral bands. For example, in some embodiments, the disclosed techniques can be implemented with optical signals having an optical signal bandwidth lying within a wavelength band ranging from about 1250 nm to about 1650 nm (e.g., the C-band ranging from 1530 nm to 1565 nm and the L-band ranging from 1565 nm to 1625 nm). Those skilled in the art will understand, however, that this wavelength range is provided for illustrative purposes only and that the disclosed techniques may operate beyond this range. It is noted that all the equations provided herein as a function of wavelength could be adapted to be expressed as a function of frequency, wave number, energy, or the like.

Various aspects and implementations of the present techniques are described below with reference to the figures.

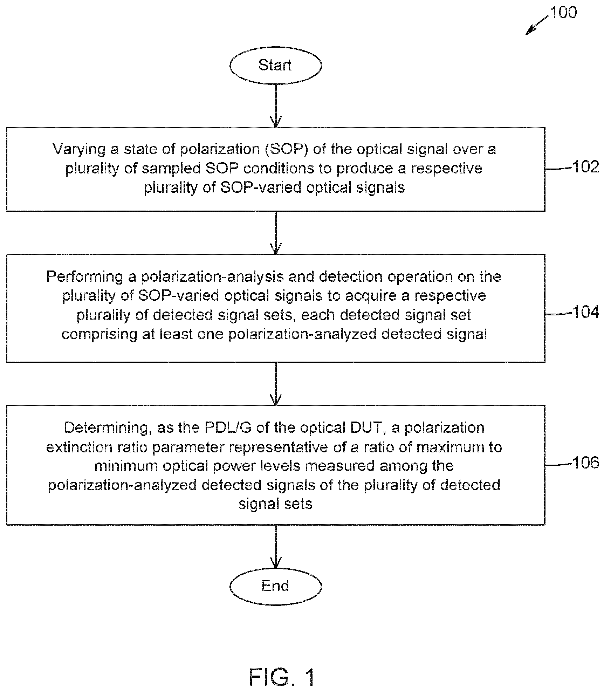

Referring to Fig. 1, there is depicted a flow diagram of a method 100 of characterizing a polarization-dependent loss or gain (PDL/G) of an optical DUT. The PDL/G of the optical DUT can be determined by polarization-analyzing an optical signal having passed through the optical device under test, wherein the optical signal is substantially unpolarized upon entering the optical DUT.

PDL/G is the dependence of insertion loss (PDL) or gain (PDG) of an optical device on the state of polarization (SOP) of the input light, where PDL and PDG are generally used to refer to polarization-dependent transmission in passive and active optical components, respectively. PDL/G represents the peak-to-peak power-throughput difference measured at the output of the device as the input is exposed to all possible SOPs. PDL/G can be expressed as follows:

$$\text{PDL/G} = 10 \log\left(\frac{P_{\max}}{P_{\min}}\right) \quad \text{(dB)} \qquad \text{PDL/G} = \frac{P_{\max}}{P_{\min}} \quad \text{(linear units)} \qquad (1)$$

where $P_{\max}$ and $P_{\min}$ are the maximum and minimum optical powers transmitted through the device with respect to all possible input SOPs, respectively. The PDL/G of an optical device can also vary over time and depending on the wavelength of the input light. Due to PDL/G, polarized signal information and unpolarized noise may be attenuated or amplified differently. This can make the optical signal-to-noise ratio (OSNR) polarization dependent and can limit, degrade, or otherwise adversely impact system performance. Since essentially all optical devices exhibit some degree of polarization-dependent transmission, characterization of PDL/G in optical fiber components, systems, and networks is important to ensure reliable operation.

The term "optical device under test" or optical "DUT" refers herein to any optical element, equipment, unit, or system, or any combination thereof, that can provide an optical path whose PDL/G may be characterized using the disclosed techniques. In some embodiments, the optical DUT whose PDL/G is characterized is an optical communication link (i.e., a link under test), such as an optical fiber transmission line, including a plurality of optical components distributed along the link. For example, long-haul terrestrial and submarine optical fiber transmission lines can include hundreds or even thousands of optical components distributed therealong between a transmitter end and a receiver end (or transceiver ends). In such embodiments, the overall PDL/G accumulated along the link depends on both the PDL/G caused by its individual components and the PDL/G caused by the coupling between the components. In other embodiments, the optical DUT whose PDL/G is characterized is a single optical component or a combination of optical components coupled together. Non-limiting examples of such optical components include, to name a few, optical fibers, isolators, circulators, connectors, couplers, splitters, filters, wavelength-division multiplexing (WDM) equipment and devices (e.g., reconfigurable optical add-drop multiplexers (ROADMs)), polarizers, amplifiers, and switches.

The term "unpolarized light" refers herein to light having a random, time-varying polarization, resulting in a degree of polarization (DOP) of zero. Unpolarized light can be described as an incoherent mixture of any two independent orthogonally polarized light beams of equal intensities. The term "substantially" with reference to the term "unpolarized light" is used to indicate that light with a DOP exactly equal to zero is not necessarily attainable or required in a given application. For example, the term "substantially unpolarized light" is intended to encompass negligibly polarized light, that is, light with a DOP that is sufficiently small to not have a noticeable or undesirable impact on the PDL/G characterization process. In some embodiments, the term "substantially unpolarized light" can refer to light having a DOP smaller than 5%, or smaller than 1%, or smaller than 0.5%, or smaller than 0.1%. It is appreciated, however, that the allowable departure from a DOP of zero can vary depending on the circumstances or requirements of a given application, for example, depending on the accuracy requirements of the PDL/G determination.

The term "unpolarized light" is also intended to encompass "effectively unpolarized light" that is, light that appears to be substantially unpolarized or negligibly polarized as seen from the detection equipment used to carry out PDL/G characterization. For example, in some embodiments, the optical signal may consist of a single data-carrying signal or multiple data-carrying signals multiplexed using wavelength-division multiplexing (WDM), for example, over a dense wavelength-division multiplexing (DWDM) network. In DWDM, multiple data-carrying signals may be propagated along a same optical fiber link within respective DWDM optical channels, where each channel corresponds to a distinct central wavelength, and where the central wavelengths of adjacent channels may be spaced by optical-frequency differences typically of 100 GHz or less. In order to increase the information content transmitted over a given spectral bandwidth, polarization multiplexing can be used, in which case the optical signal can be referred to as a polarization- and wavelength-division-multiplexed (PWDM) signal or, more concisely, as a "pol-mux" signal. A pol-mux signal is made of pairs orthogonally polarized data-carrying signals sharing the same optical signal bandwidth, which can effectively double the spectral density (e.g., measured in units of bits/Hz) of the transmitted signals. In pol-mux signal, each pair of orthogonally polarized signals is generally transmitted with approximately the same intensity, thus rendering the total resultant light effectively unpolarized as seen from test and measurement instruments having a relatively low electronic detection bandwidth, which is generally the case of conventional optical spectrum analyzers used for optical fiber link characterization.

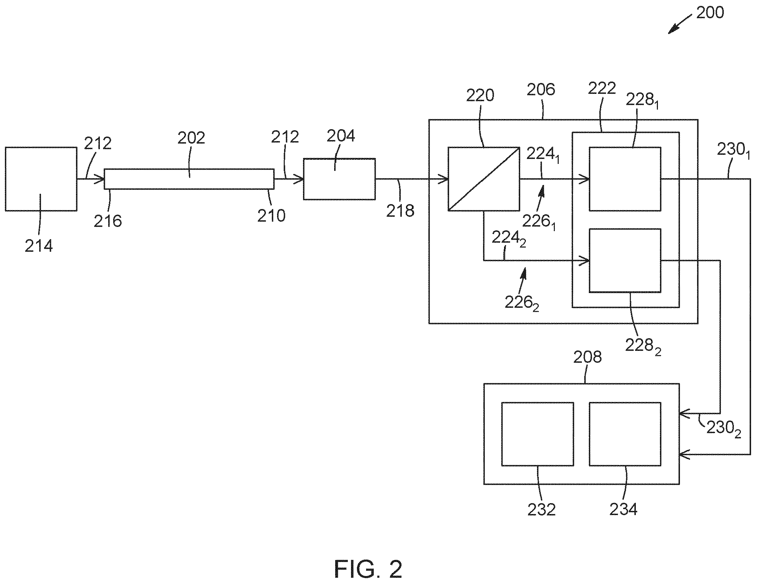

The method 100 of Fig. 1 may be implemented in a PDL/G characterization system 200, such as the one depicted in the embodiment of Fig. 2, or another suitable system. The system 200 of Fig. 2 is configured to characterize the PDL/G of an optical DUT 202. In Fig. 2, the optical DUT 202 is an optical communication link including an optical fiber and a plurality of intervening optical components (e.g., isolators, couplers, amplifiers, switches, ROADMs, and the like) distributed along the fiber. The system 200 generally includes a polarization controller 204, a polarization-analysis and detection apparatus 206, and a computer device 208. The system 200 is connected at an output port 210 of the optical DUT 202 to receive an optical signal 212 having passed through the optical DUT 202. The system 200 is configured to determine the PDL/G of the optical DUT 202 by polarization-analyzing, detecting, and processing the received optical signal 212. The system 200 may also include, or be used in combination with, a light source 214 configured to generate the optical signal 212 for injection into the optical DUT 202 at an input port 216 thereof.

The structure, configuration, and operation of these and other possible components of, or coupled to, the system 200 are described in greater detail below. It is appreciated that Fig. 2 is a schematic representation that aims to illustrate a number of components and features of the system 200, such that additional components and features, such as optical couplers and connectors, that may be useful or necessary for its practical operation may not be specifically depicted.

The light source 214 can be embodied by any appropriate device or combination of devices capable of generating substantially unpolarized light to provide a suitable optical signal 212 for PDL/G characterization. In some embodiments, the light source 214 can be a laser source, for example, a tunable laser source. In other embodiments, the light source 214 can be a light-emitting diode (LED) source. In some embodiments, the light source 214 can be a broadband source configured to generate the optical signal 212 with a spectral bandwidth having a width ranging from about 35 nm (e.g., for LED or amplified spontaneous emission (ASE) light sources used with C-band or L-band WDM systems) to about 100 nm (e.g., for semiconductor optical amplifier (SOA) light sources used with C+L-band WDM systems). In other embodiments, the light source 214 can be a narrowband source configured to generate the optical signal with a spectral bandwidth having a width ranging from about 0.01 nm to about 0.1 nm. In some embodiments, the light source 214 can be used with conditioning optics (e.g., filters, lenses, amplifiers, and the like) configured to condition the optical signal 212 before the optical signal 212 is launched into the optical DUT 202.

In some embodiments, the light source 214 may be a dedicated test source, in which case the optical signal 212 can be referred to as a "test optical signal". In some embodiments, the dedicated test source may be an amplified spontaneous emission (ASE) light source or another broadband light source capable of generating the optical signal 212 in a substantially unpolarized state. In some embodiments, the light source 214 can include a polarized light source (e.g., a laser source) combined with a "fast" polarization scrambler (i.e., fast with respect to the detection capabilities of the polarization-analysis and detection apparatus 206). It is noted that in such embodiments, the "fast" polarization scrambler of the light source 214 is distinct from the relatively "slow" polarization controller 204 of the PDL/G characterization system 200.

In other embodiments, the light source 214 may be an "in-service" light source that is normally used (e.g., in the field) to supply light signals for propagation into the optical DUT 202, so that the optical signal 212 used for PDL/G characterization can be a "live" or data-carrying signal. In such a case, the optical signal 212 may be, as noted above, a single data-carrying signal, or multiple DWDM data-carrying signals. As also noted above, in some embodiments, the light source 214 may be configured to generate the optical signal 212 as an effectively unpolarized PWDM (or pol-mux) signal. It is appreciated that embodiments using in-service/in-the-field measurements can be advantageous in that PDL/G characterization equipment may need only be placed at one location (e.g., at the output port 210 of the optical DUT 202 since no dedicated test source is needed at the input port 216). It is noted that when the optical DUT 202 is an optical fiber link, the output port 210 may be located at a network node or end, or at any position along the link for which access is possible (e.g., via tap couplers or monitoring ports disposed along the link).

The optical signal 212 enters the optical DUT 202 as substantially unpolarized light (DOP $\approx$ 0). As the optical signal 212 propagates through the optical DUT 202, it gradually becomes partially polarized (DOP $\neq$ 0) due to the PDL/G of the optical DUT 202. The optical signal 212 coming out of the optical DUT 202 and received by the system 200 for PDL/G characterization can be designated as $P_0$ and expressed as the sum of a polarized component, $P_{0,pol}$, and an unpolarized component, $P_{0,unpol}$ as follows:

$$P_0 = P_{0,\text{pol}} + P_{0,\text{unpol}} \tag{2}$$

where the ratio $P_{0,pol}/(P_{0,pol} + P_{0,unpol})$ defines the DOP of the optical signal 212.

It has been found that when the optical signal 212 is launched into the optical DUT 202 as substantially unpolarized light, the increase of its DOP as it passes through the optical DUT 202 can be related to the PDL/G of the optical DUT 202. It has also been found that when using substantially unpolarized light, the ratio $P_{max}/P_{min}$ in Equation (1) can be determined as a polarization extinction ratio (PER) parameter measured from the optical signal 212 coming out of the optical DUT 202. In such a case, $P_{max}$ corresponds to the optical power measured after the optical signal 212 has passed through an analyzer configured to pass light having an SOP corresponding to the SOP of the polarized component $P_{0,pol}$ of the optical signal 212, that is, $P_{max} = P_{0,pol} + \frac{1}{2}P_{0,unpol}$. Meanwhile, $P_{min}$ corresponds to the optical power measured after the optical signal 212 has passed through an analyzer configured to pass light having an SOP that is orthogonal to the SOP of the polarized component $P_{0,pol}$ of the optical signal 212, that is, $P_{min} = \frac{1}{2}P_{0,unpol}$. However, it is appreciated that the SOP of the polarized component $P_{0,pol}$ of the optical signal 212 after passing through the optical DUT 202 is generally unknown and is expected to a vary over time. In the disclosed techniques, in order to allow the power ratio $P_{max}/P_{min} = (2P_{0,pol} + P_{0,unpol})/P_{0,unpol}$ to be measured, the optical signal 212 received from the optical DUT 202 goes through a polarization scrambling stage, followed by a polarization-analysis and detection stage, as described in greater detail below.

Referring to both Figs. 1 and 2, the method 100 includes a step 102 of varying the SOP of the optical signal 212 received from the optical DUT 202 as a function of time over a plurality of sampled SOP conditions to produce a respective plurality of SOP-varied optical signals 218. In the system 200 of the Fig. 2, it is the polarization controller 204 that is configured to produce the plurality of SOP-varied optical signals 218. The polarization controller 204 can be embodied by any suitable type of polarization scrambler or scanner. It is appreciated that the theory, instrumentation, and operation of such polarization controlling devices are generally known in the art and need not be described in detail herein other than to facilitate an understanding of the disclosed techniques.

The number of sampled SOP conditions used can be varied depending on the circumstances or requirements of a given application (e.g., PDL/G magnitude, PDL/G determination accuracy requirements). In some embodiments, the number of sampled SOP conditions can range from about 50 to about 500, for example, from about 100 to about 300, although values outside these ranges are possible in other embodiments. Depending on the application, the selection of the plurality of sampled SOP conditions can be carried out deterministically (e.g., according to certain predetermined rules relating to the SOP coverage or uniformity over the Poincaré sphere) or randomly. In some embodiments, it may be desirable or required that the sampled SOP conditions be substantially uniformly distributed on the Poincaré sphere, such that the density of SOPs covered by the polarization scrambling or scanning operation is nearly equal over the surface of the Poincaré sphere. In some embodiments, it may be desirable or required that the sampled SOP conditions provide an approximately complete, or at least considerable, coverage of the Poincaré sphere. However, neither condition is a requirement of the disclosed techniques, such that SOP distributions with nonuniform and/or partial coverage of the Poincaré sphere are contemplated by the disclosed techniques. In some embodiments, the polarization controller 204 may be configured to vary the SOP of the optical signal between successive sampled SOP conditions over a time scale ranging from about 10 milliseconds to about 200 milliseconds, although different time scale values can be used in other embodiments. In some embodiments, the operation of the polarization controller 204 may be controlled by the computer device 208 or another control unit.

The method 100 of Fig. 1 further includes a step 104 of performing a polarization-analysis and detection operation on the plurality of SOP-varied optical signals 218 to acquire a respective plurality of detected signal sets, where each detected signal set includes at least one polarization-analyzed detected signal. In the system 200 of the Fig. 2, the polarization-analysis and detection operation is carried out by the polarization-analysis and detection apparatus 206. In the illustrated embodiment, the polarization-analysis and detection apparatus 206 includes a polarizing beam splitter 220 and a dual-channel optical detector 222.

The polarizing beam splitter 220 is optically coupled to the polarization controller 204 and configured to successively receive and split each one of the SOP-varied optical signals 218 into a first polarization-analyzed signal component $224_1$ and a second polarization-analyzed signal component $224_2$. The first polarization-analyzed signal component $224_1$ has a first analyzed SOP condition and is directed along a first beam splitting path $226_1$. The second polarization-analyzed signal component $224_2$ has a second analyzed SOP condition different from the first analyzed SOP condition, and it is directed along a second beam splitting path $226_2$. In some embodiments, the first analyzed SOP condition and the second analyzed SOP condition remain the same for all the SOP-varied optical signals 218. That is, all the first polarization-analyzed signal components $224_1$ have the same first analyzed SOP condition, and all the second polarization-analyzed signal components $224_2$ have the same second analyzed SOP condition. In the illustrated embodiment, the first analyzed SOP condition and the second analyzed SOP are linear and orthogonal to each other, although neither condition is a requirement of the disclosed techniques. It is noted that the first and second analyzed SOP conditions may be arbitrary with respect to the (*a priori* unknown) SOP of the polarized component of the optical signal 212.

The polarizing beam splitter 220 can have a variety of configurations (e.g., cube beam splitters, plate beam splitters, beam displacers, and the like) and specifications (e.g., wavelength range, material, extinction ratio, transmission and reflection efficiencies, transmitted and reflected beam deviation angles, power handling capabilities) to suit the circumstances or requirements of a given application. In particular, the theory, instrumentation, and operation of polarizing beam splitters are generally known in the art and need not be described in detail herein other than to facilitate an understanding of the disclosed techniques.

The dual-channel optical detector 222 includes a first detection channel $228_1$ and a second detection channel $228_2$ optically coupled to the first beam splitting path $226_1$ and the second beam splitting path $226_2$, respectively. The first detection channel $228_1$ is configured to receive and detect the first polarization-analyzed signal component $224_1$ associated with each one of the SOP-varied optical signals 218 as a first polarization-analyzed detected signal of the respective detected signal set, thereby acquiring a plurality of first polarization-analyzed detected signals $230_1$. The second detection channel $228_2$ is configured to detect the second polarization-analyzed signal component $224_2$ associated with each one of the SOP-varied optical signal 218 as a second polarization-analyzed detected signal of the respective detected signal set, thereby acquiring a plurality of second polarization-analyzed detected signals $230_2$.

In some embodiments, the dual-channel optical detector 222 may be a spectrally resolved detector. The term "spectrally resolved detector" broadly refers herein to any optical detector, or combination of optical detectors, capable of measuring a spectrally dependent response (e.g., an optical power spectrum as a function of frequency or wavelength over a specified spectral range) of an optical signal over a specified spectral range. In such embodiments, the plurality of first polarization-analyzed detected signals $230_1$ and the plurality of second polarization-analyzed detected signals $230_2$ correspond to a plurality of first polarization-analyzed optical power spectra and a plurality of second polarization-analyzed optical power spectra, respectively, each of these spectra being measured over a detection spectral range associated with the dual-channel optical detector 222. The dual-channel optical detector 222 can be embodied by, or be part of, various types of spectrally sensitive detectors, including optical spectrum analyzers (OSAs), swept-wavelength systems, or any other type of wavelength-selective optical detectors. For example, in the illustrated embodiment, the dual-channel optical detector 222 is embodied by a dual-channel OSA. In such a case, the polarization-analysis and detection apparatus 206, which combines a polarizing beam splitter 220 and a dual-channel OSA 222, can be referred to as a "polarization-diversity OSA".

If the number of sampled SOP conditions is equal to $N$, the dual-channel optical detector 222 of Fig. 2 is configured to measure $N$ corresponding detected signal sets $\{S_1, ..., S_N\} = \{(P_{1,\parallel}, P_{1,\perp}), ..., (P_{N,\parallel}, P_{N,\perp})\}$, where each detected signal set $S_i$ includes a pair of mutually orthogonal polarization-analyzed optical power spectra $(P_{i,\parallel}, P_{i,\perp})$, where the subscripts "$\parallel$" and "$\perp$" refer to the orientation of the first and second analyzed SOP conditions relative to the polarization axis of the polarizing beam splitter 220, respectively. In such embodiments, the operation of the polarization controller 204 can be synchronized with that of the dual-channel optical detector 222 to change the SOP of the optical signal to the $(n + 1)^{th}$ sampled SOP condition only once the acquisition of the $n^{th}$ detected signal set $(P_{i,\parallel}, P_{i,\perp})$ has been completed.

The method 100 of Fig. 1 further includes a step 106 of determining the PDL/G of the optical DUT 202 from the computation of a PER parameter $P_{max}/P_{min}$ representative of a ratio of maximum to minimum optical power levels measured among the polarization-analyzed detected signals $230_1$, $230_2$ of the plurality of detected signal sets $\{S_1, ..., S_N\}$. In the system 200 of the Fig. 2, the computation of the PER parameter is carried out by the computer device 208, which is coupled to the dual-channel optical detector 222. The computer device 208 is configured to receive, after analog-to-digital conversion, the plurality of detected signal sets $\{S_1, ..., S_N\}$ and to derive therefrom the PDL/G of the optical DUT 202.

The computer device 208 may be provided within one or more general-purpose computers or within any other suitable computing devices. The computer device 208 may be implemented in hardware, software, firmware, or any combination thereof. The computer device 208 may be connected to various components of the system 200 via wired and/or wireless communication links to send and/or receive various types of signals. Non-limiting examples of signals include timing signals, control signals, measurement signals, and data signals. The computer device 208 may be controlled by direct user input and/or by programmed instructions. The computer device 208 may include an operating system for controlling and managing various functions of the system 200. The computer device 208 may be fully or partly integrated with, or physically separate from, the other hardware components of the system 200. In some embodiments, the computer device 208 may include a distributed and/or cloud computing network. In Fig. 2, the computer device 208 generally includes a processor 232 and a memory 234.

The processor 232 as used herein is intended to refer broadly to any electronic device, circuitry, or component capable of processing, receiving, or transmitting data or instructions, such as computer programs, commands, functions, processes, software codes, executables, applications, and the like. Although the processor 232 is depicted in Fig. 2 as a single entity for illustrative purposes, the term "processor" should not be construed as being limited to a single processor, and accordingly, any known processor architecture may be used. When the processor 232 includes a plurality of processing elements, the processing elements may all be located at one site, or they may be distributed across multiple sites and interconnected by a communication network. Examples of communication networks include a local area network (LAN) and a wide area network (WAN), such as, the Internet. Non-limiting examples for the processor 232 include a general-purpose single- or multi-core processor; a central processing unit (CPU); a microprocessor; a controller; a microcontroller; a digital signal processor (DSP); a programmable logic device; a field-programmable gate array (FPGA); an application-specific integrated circuit (ASIC); a digital processor or circuit; an analog processor or circuit; state machine; and/or any other device capable of processing information.

The memory 234, which may also be referred to as a "computer readable storage medium" is capable of storing computer programs and other data to be retrieved by the processor 232. In the present description, the terms "computer readable storage medium" and "computer readable memory" are intended to refer to a non-transitory and tangible computer product that can store and communicate executable instructions for the implementation of various steps of the techniques disclosed herein. The memory 234 may be any computer data storage device or assembly of such devices, including a random-access memory (RAM) of any type; a read-only memory (ROM) of any type; a magnetic storage device; an optical storage device; a solid-state drive (SSD) device, such as a flash drive memory; or any other tangible and/or non-transitory computer readable medium which can be used to store electronic data or information. The memory 234 may be associated with, coupled to, or included in the processor 232, and the processor 232 may be configured to execute instructions contained in a computer program stored in the memory 234 and relating to various functions and operations associated with the processor 232. While the memory 234 is depicted in Fig. 2 as a single entity for illustrative purposes, the term "memory" should not be construed as being limited to a single memory unit, and accordingly, any known memory architecture may be used. When the memory 234 includes a plurality of memory elements, the memory elements may all be located at one site, or they may be distributed across multiple sites and interconnected by a communication network such that the memory 234 represents the functionalities of a plurality of devices operating in coordination.

Referring still to Fig. 2, the PER parameter $P_{max}/P_{min}$ can be determined from the N detected signal sets $\{S_1, ..., S_N\}$ since, for one of the detected signal sets (say, for definiteness, the $m^{th}$ detected signal set), the SOP of the polarized component of the corresponding SOP-varied optical signal 218 will either be parallel or perpendicular with respect to the first analyzed SOP condition (and vice versa with respect to the second analyzed SOP condition). When parallel, the power level $P_{m,\parallel}$ of the $m^{th}$ first polarization-analyzed detected signal will correspond to $P_{max}$, while the power level $P_{m,\perp}$ of the $m^{th}$ second polarization-analyzed detected signal will correspond to $P_{min}$. When perpendicular, the power level $P_{m,\parallel}$ of the $m^{th}$ first polarization-analyzed detected signal will correspond to $P_{min}$, while the power level $P_{m,\perp}$ of the $m^{th}$ second polarization-analyzed detected signal will correspond to $P_{max}$.

In some embodiments, the determination of the PER parameter $P_{max}/P_{min}$ can include a step of computing a plurality of polarization-analyzed power ratio signals $\{(R_{1,\parallel}, R_{1,\perp}), ..., (R_{N,\parallel}, R_{N,\perp})\}$ using the plurality of detected signal sets $\{S_1, ..., S_N\} = \{(P_{1,\parallel}, P_{1,\perp}), ..., (P_{N,\parallel}, P_{N,\perp})\}$, as follows:

$$R_{n,\parallel}(\lambda) = \frac{P_{n,\parallel}(\lambda)}{P_{n,\perp}(\lambda)} \qquad (3a)$$

$$R_{n,\perp}(\lambda) = \frac{P_{n,\perp}(\lambda)}{P_{n,\|}(\lambda)} \qquad\qquad (3b)$$

where $n = 1, ..., N$. It is noted that the dependence on wavelength have been included in Equations (3a) and (3b), as well as in other numbered equations hereinbelow, but has been omitted elsewhere for brevity and notational convenience. The plurality of polarization-analyzed power ratio signals ($R_{n,\|}$, $R_{n,\perp}$) includes a plurality of first power ratio signals $R_{n,\|}$ and a plurality of second power ratio signals $R_{n,\perp}$. The first power ratio signal $R_{n,\|}$ associated with the $n^{th}$ detected signal set $S_n$ corresponds to a power ratio of the first polarization-analyzed detected signal $P_{n,\|}$ to the second polarization-analyzed detected signal $P_{n,\perp}$ of the $n^{th}$ detected signal set $S_n$. The second power ratio signal $R_{n,\perp}$ associated with the $n^{th}$ detected signal set $S_n$ corresponds to a power ratio of the second polarization-analyzed detected signal $P_{n,\perp}$ to the first polarization-analyzed detected signal $P_{n,\|}$ of the $n^{th}$ detected signal set $S_n$.

The determination of the PER parameter $P_{max}/P_{min}$ can further include a step of identifying at least one extremum power ratio signal, $R_{max}$ and $R_{min}$, from the plurality of polarization-analyzed power ratio signals $\{(R_{1,\|}, R_{1,\perp}), ..., (R_{N,\|}, R_{N,\perp})\}$, as follows:

$$R_{max}(\lambda) = \max\big(R_{1,\|}(\lambda), ..., R_{N,\|}(\lambda), R_{1,\perp}(\lambda), ..., R_{N,\perp}(\lambda)\big) \qquad\qquad (4a)$$

$$R_{min}(\lambda) = \min\big(R_{1,\|}(\lambda), ..., R_{N,\|}(\lambda), R_{1,\perp}(\lambda), ..., R_{N,\perp}(\lambda)\big) \qquad\qquad (4b)$$

where max(...) and min(...) are maximum and minimum operators configured to select or determine the maximum and minimum values of two or more inputs, respectively. The parameter $P_{max}/P_{min}$ can be determined from the at least one extremum power ratio signal as follows, yielding the following result for the PDL/G($\lambda$) of the optical DUT 202:

$$\text{PDL/G}(\lambda) = 10\log\left(\frac{P_{max}(\lambda)}{P_{min}(\lambda)}\right) = 10\log[R_{max}(\lambda)] = -10\log[R_{min}(\lambda)]. \qquad\qquad (5)$$

It is noted that when the coverage of the Poincaré sphere provided by the N sampled SOP conditions is sufficiently high and uniform, then $R_{max}$ and $R_{min}$ may be found from either (i) only the plurality of first power ratio signals $R_{n,\|}$, such that $R_{max} = \max(R_{1,\|}, ..., R_{N,\|})$ and $R_{min} = \min(R_{1,\|}, ..., R_{N,\|})$, or (ii) only the plurality of second power ratio signals $R_{n,\perp}$, such that $R_{max} = \max(R_{1,\perp}, ..., R_{N,\perp})$ and $R_{min} = \min(R_{1,\perp}, ..., R_{N,\perp})$.

It is also noted that since (i) Equation (5) involves only relative power measurements and (ii) the first and second polarization-analyzed detected signals $P_{n,\|}$, and $P_{n,\perp}$. of each detected signal set can be acquired simultaneously, the techniques disclosed herein can be substantially insensitive to non-polarization-dependent power variations that could otherwise negatively impact the PDL/G determination. Furthermore, the PDL/G spectrum derived from Equation (5) can be substantially impervious to PDL/G variations in wavelength and time.

Since the first and second polarization-analyzed detected signals $\{(P_{1,\|}, P_{1,\perp}), ..., (P_{N,\|}, P_{N,\perp})\}$ correspond to polarization-analyzed optical power spectra measured at a number of wavelengths over a specified detection spectral range, the PER parameter may be determined as a PER spectrum from the polarization-analyzed optical power spectra on a wavelength-by-wavelength basis. In such a case, the magnitude of the PER spectrum (and thus of the PDL/G spectrum) at a given wavelength is representative of a ratio of maximum to minimum optical power levels detected among the polarization-analyzed optical power spectra at that wavelength. In such a case, $R_{max}(\lambda)$ and $R_{min}(\lambda)$ are constructed as composite extremum spectra, such that if $R_{max}(\lambda_u)$ and $R_{min}(\lambda_u)$ respectively correspond to, say, $R_{m,\|}$ and $R_{m,\perp}$, then $R_{max}(\lambda_v)$ and $R_{min}(\lambda_v)$, may be or may not respectively correspond to $R_{m,\|}$ and $R_{m,\perp}$. In other words, different spectral points of $R_{max}(\lambda)$ and $R_{min}(\lambda)$ may or may not correspond to different sampled SOP conditions. This is the result of the optical DUT 202 having a wavelength-dependent PDL/G.

In some embodiments, the number of wavelengths at which the PDL/G of the optical DUT 202 is computed can range from about 100 to about 1 000 000. In embodiments where the optical signal 212 is transmitted over one of more DWDM optical channels, the spectral range over which the PDL/G spectrum is determined can span the one or more DWDM optical channels or, in the case of multiple DWDM optical channels, a subset of the DWDM optical channels. For example, in some embodiments, the spectral range over which the PDL/G spectrum is determined can range from about 1530 nm to about 1625 nm to cover the operating spectral bandwidth of conventional DWDM systems, or from about 1250 nm to about 1650 nm to cover the operating spectral bandwidth of conventional coarse WDM (CWDM) systems. In some embodiments, the PDL/G can be evaluated only at a single or a few wavelengths, for example, if the optical signal is monochromatic or narrowband, or if it is desired or required that the PDL/G be measured at single or a few specific frequencies of interest.

In some embodiments, the dual-channel optical detector 222 may be a non-spectral-sensitive optical detector (e.g., an optical power meter) configured to measure the plurality of detected signal sets in a non-spectrally revolved, intensity-based manner. In such a case, the PDL/G of the optical DUT 202 is obtained as a single value response, averaged or integrated over a wavelength range corresponding to the detection spectral range of the detector (or the signal bandwidth, whichever is narrower). In embodiments where the dual-channel optical detector 222 is a non-spectrally resolved detector, the PDL/G of the optical DUT 202 may still be determined as PDL/G spectrum, for example, if the light source 214 is a wavelength-tunable, monochromatic or sufficiently narrowband light source.

It is appreciated that the PER parameter $P_{max}/P_{min}$ determined from the plurality of detected signal sets {$S_1$, ..., $S_N$} can be obtained in a manner that does not involve the computation of polarization-analyzed power ratio signals {$(R_{1,\parallel}, R_{1,\perp})$, ..., $(R_{N,\parallel}, R_{N,\perp})$}, but that nonetheless yields an equivalent result. For example, in some embodiments, the determination of the PER parameter $P_{max}/P_{min}$ can include a step of computing a plurality of transmittance power ratio signals {$(T_{1,\parallel}, T_{1,\perp})$, ..., $(T_{N,\parallel}, T_{N,\perp})$} using the plurality of detected signal sets {$S_1$, ..., $S_N$} = {$(P_{1,\parallel}, P_{1,\perp})$, ..., $(P_{N,\parallel}, P_{N,\perp})$}, as follows:

$$T_{i,\parallel}(\lambda) = \frac{P_{i,\parallel}(\lambda)}{P_{i,\parallel}(\lambda) + P_{i,\perp}(\lambda)} \tag{6a}$$

$$T_{i,\perp}(\lambda) = \frac{P_{i,\perp}(\lambda)}{P_{i,\parallel}(\lambda) + P_{i,\perp}(\lambda)} \tag{6b}$$

where $n$ = 1, ..., $N$. The plurality of transmittance power ratio signals ($T_{n,\parallel}$, $T_{n,\perp}$) includes a plurality of first power ratio signals $T_{n,\parallel}$ and a plurality of second power ratio signals $T_{n,\perp}$. The first power ratio signal $T_{n,\parallel}$ associated with the $n^{th}$ detected signal set $S_n$ corresponds to a power ratio of the first polarization-analyzed detected signal $P_{n,\parallel}$ to the sum of the first polarization-analyzed detected signal $P_{n,\parallel}$ and the second polarization-analyzed detected signal $P_{n,\perp}$ of the $n^{th}$ detected signal set $S_n$. The second power ratio signal $T_{n,\perp}$ associated with the $n^{th}$ detected signal set $S_n$ corresponds to a power ratio of the second polarization-analyzed detected signal $P_{n,\perp}$ to the sum of the first polarization-analyzed detected signal $P_{n,\parallel}$ and the second polarization-analyzed detected signal $P_{n,\perp}$ of the $n^{th}$ detected signal set $S_n$.

The determination of the PER parameter $P_{max}/P_{min}$ can further include a step of identifying at least one extremum power ratio signal, $T_{max}$ and $T_{min}$, from the plurality of transmittance power ratio signals {$(T_{1,\parallel}, T_{1,\perp})$, ..., $(T_{N,\parallel}, T_{N,\perp})$}, as follows:

$$T_{max}(\lambda) = \max\left(T_{1,\parallel}(\lambda), ..., T_{N,\parallel}(\lambda), T_{1,\perp}(\lambda), ..., T_{N,\perp}(\lambda)\right) \tag{7a}$$

$$T_{min}(\lambda) = \min\left(T_{1,\parallel}(\lambda), ..., T_{N,\parallel}(\lambda), T_{1,\perp}(\lambda), ..., T_{N,\perp}(\lambda)\right). \tag{7b}$$

The parameter $P_{max}/P_{min}$ can be determined from the at least one extremum power ratio signal as follows, yielding the following result for the PDL/G(A) of the optical DUT 202:

$$PDL/G(\lambda) = 10\log\left[\frac{P_{max}(\lambda)}{P_{min}(\lambda)}\right] = 10\log\left[\frac{T_{max}(\lambda)}{T_{min}(\lambda)}\right] = 10\log\left[\frac{1 + \Delta T_{max\text{-}min}(\lambda)}{1 - \Delta T_{min\text{-}min}(\lambda)}\right] \tag{8}$$

where $\Delta T_{max\text{-}min}$ = $T_{max}$ - $T_{min}$. It can be verified that Equations (5) and (8) are equivalent, since in both cases the PER parameter $P_{max}/P_{min}$ can be rewritten as the ratio of max($P_{1,\parallel}$, ..., $P_{N,\parallel}$, $P_{1,\perp}$, ...., $P_{N,\perp}$) to min($P_{1,\parallel}$, ..., $P_{N,\parallel}$, $P_{1,\perp}$, ...., $P_{N,\perp}$).

It is noted that when the coverage of the Poincaré sphere provided by the N sampled SOP conditions is sufficiently high and uniform, then $T_{max}$ and $T_{min}$ may be found from either (i) only the plurality of first power ratio signals $T_{n,\parallel}$, such that $T_{max}$ = max($T_{1,\parallel}$, ..., $T_{N,\parallel}$) and $T_{min}$ = min($T_{1,\parallel}$, ..., $T_{N,\parallel}$), or (ii) only the plurality of second power ratio signals $T_{n,\perp}$, such that $T_{max}$ = max($T_{1,\perp}$, ..., $T_{N,\perp}$) and $T_{min}$ = min($T_{1,\perp}$, ..., $T_{N,\perp}$). As noted above with respect to $R_{max}(\lambda)$ and $R_{min}(\lambda)$, since the first and second polarization-analyzed detected signals {$(P_{1,\parallel}, P_{1,\perp})$, ..., $(P_{N,\parallel}, P_{N,\perp})$} correspond to polarization-analyzed optical power spectra, then $T_{max}(\lambda)$ and $T_{min}(\lambda)$ can also be constructed as composite extremum spectra, such that if $T_{\max}(\lambda_u)$ and $T_{\min}(\lambda_u)$ respectively correspond to, say, $T_{n,\parallel}$ and $T_{n,\perp}$, then $T_{\max}(\lambda_v)$ and $T_{\min}(\lambda_v)$, may be or may not respectively correspond to $T_{n,\parallel}$ and $T_{n,\perp}$.

Referring still to Fig. 2, it is noted that for small PDL/G values (e.g., 5 dB or less), the PDL/G of components of the system 200 may introduce non-negligible errors in the PDL/G measurements of the optical DUT 202. In some embodiments, one possible source of error can result from a polarization-dependent imbalance between the first detection channel $228_1$ and the second detection channel $228_2$ of the dual-channel optical detector 222. The polarization-dependent imbalance can result, for example, from calibration errors, drifts, or other conditions. In some embodiments, the polarization-dependent imbalance between the detection channels $228_1$, $228_2$ can be measured, modeled, or otherwise determined as a first imbalance parameter $\Delta_\parallel$ associated with the first detection channel $228_1$ and a second imbalance parameter $\Delta_\perp$ associated with the second detection channel $228_2$. In such a case, and assuming that the coverage of the Poincaré sphere provided by the $N$ sampled SOP conditions is sufficiently high and uniform, Equations (3a)-(3b), (4a)-(4b), (6a)-(6b), and (7a)-(7b) can be generalized, respectively, as follows:

$$R_{i,\parallel}(\lambda) = \left(\frac{\Delta_\parallel}{\Delta_\perp}\right)\frac{P_{i,\parallel}(\lambda)}{P_{i,\perp}(\lambda)} \tag{9a}$$

$$R_{i,\perp}(\lambda) = \left(\frac{\Delta_\perp}{\Delta_\parallel}\right)\frac{P_{i,\perp}(\lambda)}{P_{i,\parallel}(\lambda)} \tag{9b}$$

$$R_{\parallel,\max}(\lambda) = \max\left(R_{1,\parallel}(\lambda),\dots,R_{N,\parallel}(\lambda)\right) = \left(\frac{\Delta_\parallel}{\Delta_\perp}\right)\frac{P_{\parallel,\max}(\lambda)}{P_{\perp,\min}(\lambda)} \tag{10a}$$

$$R_{\perp,\max}(\lambda) = \max\left(R_{1,\perp}(\lambda),\dots,R_{N,\perp}(\lambda)\right) = \left(\frac{\Delta_\perp}{\Delta_\parallel}\right)\frac{P_{\perp,\max}(\lambda)}{P_{\parallel,\min}(\lambda)} \tag{10b}$$

$$R_{\parallel,\min}(\lambda) = \min\left(R_{1,\parallel}(\lambda),\dots,R_{N,\parallel}(\lambda)\right) = \left(\frac{\Delta_\parallel}{\Delta_\perp}\right)\frac{P_{\parallel,\min}(\lambda)}{P_{\perp,\max}(\lambda)} \tag{10c}$$

$$R_{\perp,\min}(\lambda) = \min\left(R_{1,\perp}(\lambda),\dots,R_{N,\perp}(\lambda)\right) = \left(\frac{\Delta_\perp}{\Delta_\parallel}\right)\frac{P_{\perp,\min}(\lambda)}{P_{\parallel,\max}(\lambda)} \tag{10d}$$

$$T_{i,\parallel}(\lambda) = \frac{P_{i,\parallel}(\lambda)}{P_{i,\parallel}(\lambda) + P_{i,\perp}(\lambda)} \tag{11a}$$

$$T_{i,\perp}(\lambda) = \frac{P_{i,\perp}(\lambda)}{P_{i,\parallel}(\lambda) + P_{i,\perp}(\lambda)} \tag{11b}$$

$$T_{\parallel,\max}(\lambda) = \max\left(T_{1,\parallel}(\lambda),\dots,T_{N,\parallel}(\lambda)\right) = \frac{\Delta_\parallel P_{\parallel,\max}(\lambda)}{\Delta_\parallel P_{\parallel,\max}(\lambda) + \Delta_\perp P_{\perp,\min}(\lambda)} \tag{12a}$$

$$T_{\perp,\max}(\lambda) = \max\left(T_{1,\perp}(\lambda),\dots,T_{N,\perp}(\lambda)\right) = \frac{\Delta_\perp P_{\perp,\max}(\lambda)}{\Delta_\parallel P_{\parallel,\min}(\lambda) + \Delta_\perp P_{\perp,\max}(\lambda)} \tag{12b}$$

$$T_{\parallel,\min}(\lambda) = \min\left(T_{1,\parallel}(\lambda),\dots,T_{N,\parallel}(\lambda)\right) = \frac{P_{\parallel,\min}(\lambda)}{\Delta_\parallel P_{\parallel,\min\parallel}(\lambda) + \Delta_\perp P_{\perp,\max}(\lambda)} \tag{12c}$$

$$T_{\perp,\min}(\lambda) = \min\left(R_{1,\perp}(\lambda), \ldots, T_{N,\perp}(\lambda)\right) = \frac{P_{\perp,\min}(\lambda)}{\Delta_{\parallel} P_{\parallel,\max}(\lambda) + \Delta_{\perp} P_{\perp,\min}(\lambda)}. \tag{12d}$$

In such embodiments, the step of computing the PER parameter from the plurality of first polarization-analyzed detected signals $\{P_{1,\parallel}, \ldots, P_{N,\parallel}\}$ and the plurality of second polarization-analyzed detected signals $\{P_{1,\perp}, \ldots, P_{N,\perp}\}$ while compensating at least partly for the polarization-dependent imbalance (e.g., accounted by the imbalance parameters $\Delta_{\parallel}$, $\Delta_{\perp}$). For example, from Equations (10a-10d) and (12a-12d), the ratio $P_{\max}(\lambda)/P_{\min}(\lambda)$ appearing in Equations (5) and (8) for PDL/G(2) can be generalized, respectively, as follows:

$$\frac{P_{\max}(\lambda)}{P_{\min}(\lambda)} = \left[R_{\parallel,\max}(\lambda) \cdot R_{\perp,\max}(\lambda)\right]^{\frac{1}{2}} = \left[R_{\parallel,\min}(\lambda) \cdot R_{\perp,\min}(\lambda)\right]^{-\frac{1}{2}} = \left[\frac{R_{\parallel,\max}(\lambda)}{R_{\parallel,\min}(\lambda)}\right]^{\frac{1}{2}} = \left[\frac{R_{\perp,\max}(\lambda)}{R_{\perp,\min}(\lambda)}\right]^{\frac{1}{2}} \tag{13}$$

$$\frac{P_{\max}(\lambda)}{P_{\min}(\lambda)} = \left[\frac{T_{\parallel,\max}(\lambda)}{T_{\perp,\min}(\lambda)} \cdot \frac{T_{\perp,\max}(\lambda)}{T_{\parallel,\min}(\lambda)}\right]^{\frac{1}{2}} = \left[\frac{P_{\parallel,\max}(\lambda) \cdot P_{\perp,\max}(\lambda)}{P_{\parallel,\min}(\lambda) \cdot P_{\perp,\min}(\lambda)}\right]^{\frac{1}{2}} \tag{14}$$

where the first and second unbalance parameters $\Delta_{\parallel}$ and $\Delta_{\perp}$ have been canceled out, thus reducing their impact on the PDL/G measurements. It can be verified that when (i) $\Delta_{\parallel} = \Delta_{\perp} = 1$ and (ii) $R_{\parallel,\max} = R_{\perp,\max} = R_{\max}$, $R_{\parallel,\min} = R_{\perp,\min} = R_{\max}$, $T_{\parallel,\max} = T_{\perp,\max} = T_{\max}$, and $T_{\parallel,\min} = T_{\perp,\min} = T_{\min}$, then the results for PDL/G$(\lambda)$ obtained from Equations (13) and (14) reduce to those obtained from Equations (5) and (8), respectively.

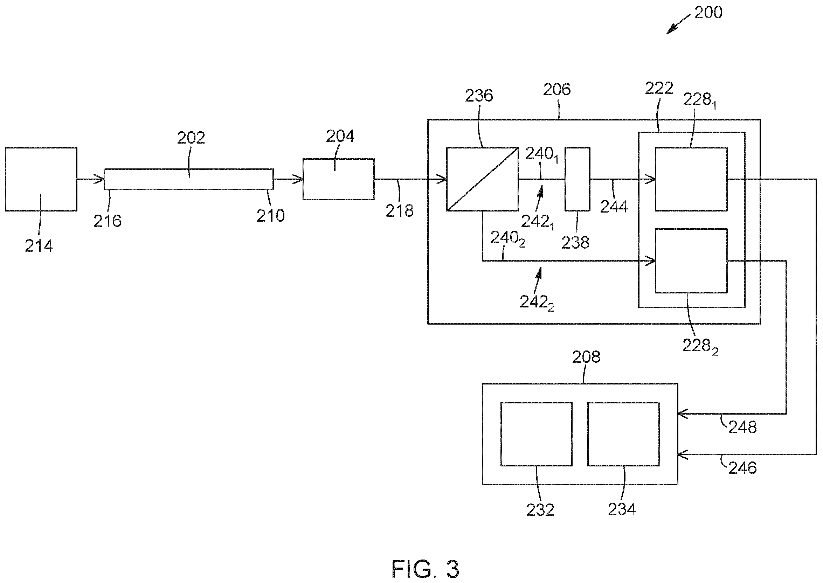

Referring to Fig. 3, there is illustrated another embodiment of a system 200 for characterizing the PDL/G of an optical DUT 202 from an optical signal 212 having passed through the optical DUT 202. This embodiment shares several features with the embodiment of Fig. 2, which will not be described again in detail other than to highlight differences between them. The embodiment of Fig. 3 differs from that of Fig. 2 in the configuration of the polarization-analyzing unit of the polarization-analysis and detection apparatus 206. In the embodiment of Fig. 3, rather than using a polarizing beam splitter as in Fig. 2, the polarization-analyzing unit includes a combination of a non-polarizing beam splitter 236 and a polarizer 238. The non-polarizing beam splitter 236 is optically coupled to the polarization controller 204 and configured to receive and split each one of the SOP-varied optical signals 218 into (i) a first signal component $240_1$ directed along a first beam splitting path $242_1$ and (ii) a second signal component $240_2$ directed along a second beam splitting path $242_2$. In some embodiments, non-polarizing beam splitter 236 may be configured to split the intensity of each SOP-varied optical signal 218 evenly (50:50 split) in the first signal component $240_1$ and the second signal component $240_2$, but this is not a requirement of the disclosed techniques. The non-polarizing beam splitter 236 can have a variety of configurations (e.g., cube beam splitters, plate beam splitters.) and specifications (e.g., wavelength range, material, polarization-dependent splitting ratio, transmission and reflection efficiencies, transmitted and reflected beam deviation angles, power handling capabilities) to suit the circumstances or requirements of a given application. In particular, the theory, instrumentation, and operation of non-polarizing beam splitters are generally known in the art and need not be described in detail herein other than to facilitate an understanding of the disclosed techniques.

The polarizer 238 is disposed along the first beam splitting path $242_1$. The polarizer 238 is configured to receive the first signal component $240_1$ associated with each SOP-varied optical signal 218 and produce therefrom a polarization-analyzed signal component 244 having an analyzed SOP condition. In some embodiments, the analyzed SOP condition is the same for all the SOP-varied optical signals 218. In the illustrated embodiment, the analyzed SOP condition is a linear polarization state, but this is not requirement of the disclosed techniques. It is noted that the analyzed SOP condition may be arbitrary with respect to the (*a priori* unknown) SOP of the polarized component of the optical signal 212. The polarizer 238 can have a variety of configurations and specifications to suit the circumstances or requirements of a given application. In particular, the theory, instrumentation, and operation of polarizers are generally known in the art and need not be described in detail herein other than to facilitate an understanding of the disclosed techniques.

Referring still to Fig. 3, the polarization-analysis and detection apparatus 206 includes a dual-channel optical detector 222, having a first detection channel $228_1$ and a second detection channel $228_2$ that are optically coupled to the first beam splitting path $226_1$ and the second beam splitting path $226_2$, respectively. The first detection channel $228_1$ is configured to receive and detect the polarization-analyzed signal component 244 associated with each one of the N SOP-varied optical signals 218 as a single polarization-analyzed detected signal of the respective detected signal set $S_n$ ($n = 1, \ldots, N$), thereby acquiring a plurality of single polarization-analyzed detected signals 246. The second detection channel $228_2$ is configured to detect the second signal component $240_2$ associated with each of the N SOP-varied optical signals 218 as a non-polarization-analyzed detected signal 248 of the respective detected signal set $S_n$. As in Fig. 2, the dual-channel optical detector 222 can be a spectrally resolved detector, for example, a dual-channel OSA, so that the plurality of single polarization-analyzed detected signals 246 and the plurality of non-polarization-analyzed detected signals 248 correspond to a plurality of single polarization-analyzed optical power spectra and a plurality of non-polarization-analyzed optical power spectra, respectively, each of these spectra being measured over a detection spectral range associated with the dual-channel optical detector 222. In other embodiments, the dual-channel optical detector 222 can be a non-spectral-sensitive detector, for example, an optical power meter.

In the embodiment of Fig. 3, the processor 232 is configured to determine the PDL/G of the optical DUT 202 as a PER parameter $P_{max}/P_{min}$ by performing a first step of normalizing, in each detected signal set $S_n$, the single polarization-analyzed detected signal $P_{n,1}(\lambda)$ using the non-polarization-analyzed detected signal $P_{n,2}(\lambda)$, thereby producing a plurality of normalized polarization-analyzed detected signals $\tilde{P}_{n,1}(\lambda)$ which can be expressed as follows:

$$\tilde{P}_{n,1}(\lambda) = \frac{P_{n,1}(\lambda)}{P_{n,2}(\lambda)} \qquad (15)$$

where $n$ = 1, ..., N, with $N$ being the number of sampled SOP conditions and corresponding to detected signal sets $\{S_1, ..., S_N\} = \{(\tilde{P}_{1,1}, P_{1,2}), ..., (\tilde{P}_{N,1}, P_{N,2})\}$. The normalization operation can make the PDL/G characterization substantially insensitive, or at least less sensitive, to variations in the optical power of the optical signal 212 during measurements.

The PDL/G determination can include a second step of identifying a maximum ratio signal $\tilde{P}_{1,max}(\lambda)$ and a minimum ratio signal $\tilde{P}_{1,min}(\lambda)$ from the plurality of normalized polarization-analyzed power ratio signals, as follows:

$$\tilde{P}_{1,max}(\lambda) = \max\left(\tilde{P}_{1,1}(\lambda), ..., \tilde{P}_{N,1}(\lambda)\right) \qquad (16a)$$

$$\tilde{P}_{1,min}(\lambda) = \min\left(\tilde{P}_{1,1}(\lambda), ..., \tilde{P}_{N,1}(\lambda)\right). \qquad (16b)$$

The parameter $P_{max}/P_{min}$ can be determined from the maximum ratio signal $\tilde{P}_{1,max}$ and the minimum ratio signal $\tilde{P}_{1,min}$ as follows, yielding the following result for the PDL/G(2) of the optical DUT 202:

$$\mathrm{PDL/G}(\lambda) = 10 \log\left[\frac{P_{max}(\lambda)}{P_{min}(\lambda)}\right] = 10 \log\left[\frac{\tilde{P}_{1,max}(\lambda)}{\tilde{P}_{1,min}(\lambda)}\right]. \qquad (17)$$

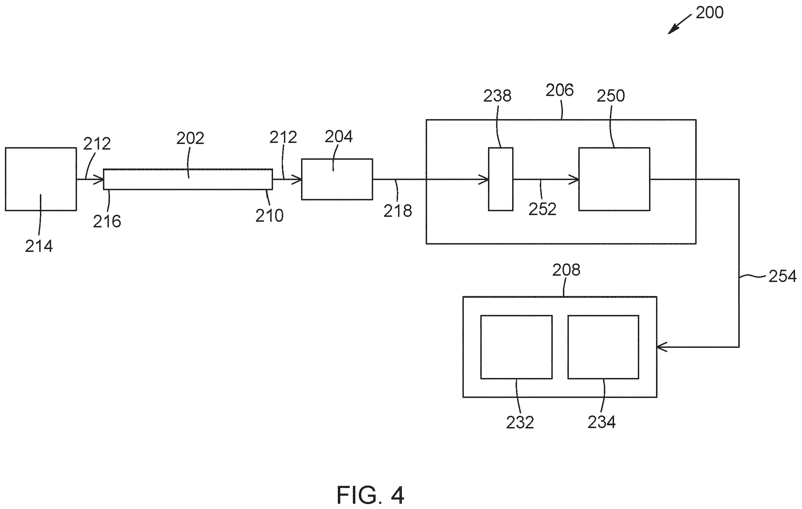

Referring to Fig. 4, there is illustrated another embodiment of a system 200 for characterizing the PDL/G of an optical DUT 202 from an optical signal 212 having passed through the optical DUT 202. This embodiment shares several features with the embodiments of Figs. 2 and 3, which will not be described again in detail other than to highlight differences between them. In the embodiment of Fig. 4, the polarization-analysis and detection apparatus 206 includes a polarizer 238 and a single-channel optical detector 250. The polarizer 238 is optically coupled to the polarization controller 204 and configured to receive and polarizationanalyze each one of the SOP-varied optical signals 218 and produce therefrom a polarization-analyzed signal component 252 having an analyzed SOP. The analyzed SOP may be the same for all the SOP-varied optical signals 218. The analyzed SOP condition can be a linear polarization state, but this is not requirement of the disclosed techniques.

Referring still to Fig. 4, the single-channel optical detector 250 is optically coupled to the polarizer 238 and configured to detect the polarization-analyzed signal component 252 associated with each one of the SOP-varied optical signals 218 as a polarization-analyzed detected signal of a respective detected signal set $S_n$ ($n$ = 1, ..., N), thereby acquiring a plurality of single polarization-analyzed detected signals 254. In some embodiments, the single-channel optical detector 250 can be a spectrally resolved detector, for example, a single-channel OSA, so that the plurality of polarization-analyzed detected signals 254 corresponds to a plurality of polarization-analyzed optical power spectra measured over a detection spectral range associated with the single-channel optical detector 250. In other embodiments, the single-channel optical detector 250 can be a non-spectral-sensitive detector, for example, an optical power meter.

In the embodiment of Fig. 4, the processor 232 is configured to determine the PDL/G of the optical DUT 202 as a PER parameter by performing a step of identifying a maximum signal $P_{max}$ and a minimum signal $P_{min}$ from the plurality of polarization-analyzed detected signals $P_n$, $n$ =1, ..., N, as follows:

$$P_{\text{max}}(\lambda) = \max(P_1(\lambda), ..., P_N(\lambda)) \qquad (18a)$$

$$P_{\text{min}}(\lambda) = \min(P_1(\lambda), ..., P_N(\lambda)). \qquad (18b)$$

The parameter $P_{\text{max}}/P_{\text{min}}$ can be determined from the maximum ratio signal $P_{1,\text{max}}$ and the minimum ratio signal $P_{1,\text{min}}$ as follows, yielding the following result for the PDL/G(2) of the optical DUT 202:

$$\text{PDL/G}(\lambda) = 10 \log \left[ \frac{P_{\text{max}}(\lambda)}{P_{\text{min}}(\lambda)} \right] = 10 \log \left[ \frac{\max(P_1(\lambda), ..., P_N(\lambda))}{\min(P_1(\lambda), ..., P_N(\lambda))} \right]. \qquad (19)$$

Since the plurality of polarization-analyzed detected signals given by Equations (18a)-(18b) are not normalized, the PDL/G characterization may be more sensitive to variations in the optical power of the optical signal 212 during measurements, that is, as the SOP of the optical signal 212 is scanned over the plurality of sampled SOP conditions. However, the embodiment of Fig. 4 can be useful in implementations where the input optical power remains sufficiently constant during the measurements to have no effect, or at least no discernable or adverse effect, on the reliability of the PDL/G characterization.

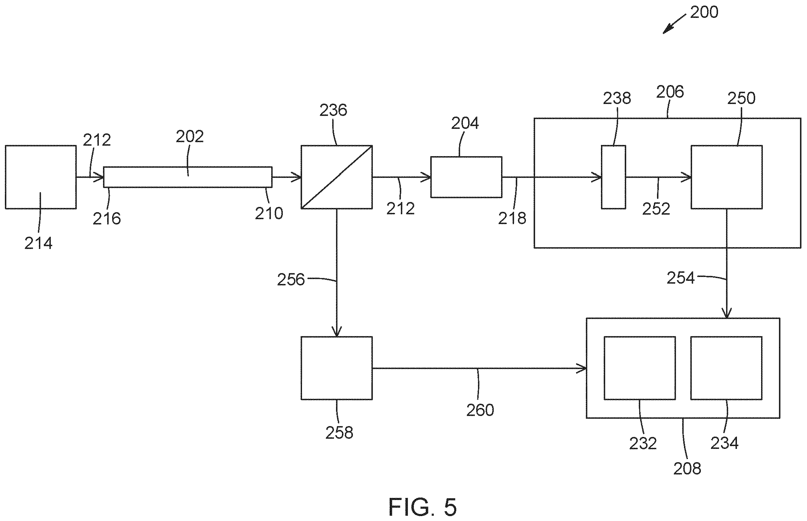

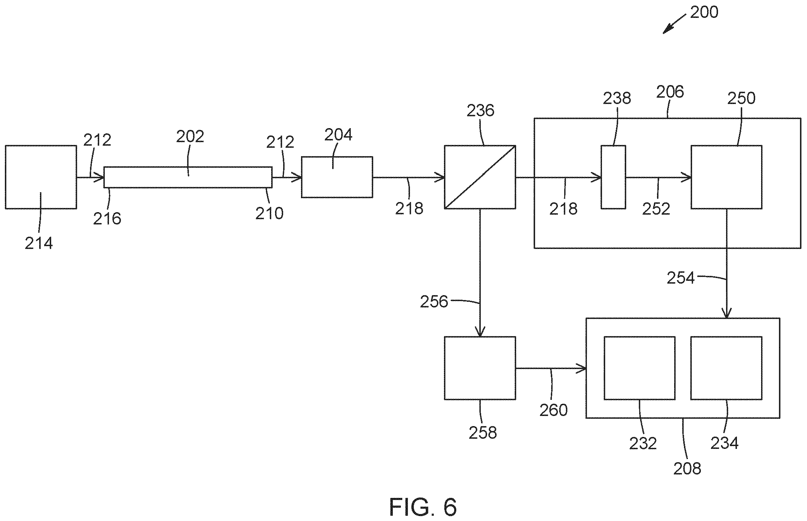

In some implementations, the single-channel detector embodiment of Fig. 4 can be modified to become less sensitive to the impact of input optical power fluctuations. For example, this can be achieved by adding a non-polarizing beam splitter 236 before the polarizer 238 and either before (Fig. 5) or after (Fig. 6) the polarization controller 204. The non-polarizing beam splitter 236 is employed to extract a portion 256 of the optical power from the optical signal 212 (Fig. 5) or from the SOP-varied optical signals 218 (Fig. 6). The non-polarizing beam splitter 236 is also configured to direct the extracted light 256 onto another detector 258. The detector 258 is configured to detect the extracted light 256 as one (Fig. 5) or a plurality (Fig. 6) of normalizing optical signals 260. The one or more normalizing optical signals 260 can be used for normalizing the plurality of polarization-analyzed detected signals 254 in a manner similar to that described above with respect to the embodiment of Fig. 3.

In accordance with another aspect, there is provided a non-transitory computer readable storage medium having stored thereon computer readable instructions that, when executed by a processor, cause the processor to perform a method of characterizing a PDL/G of an optical DUT from an optical signal having passed through the optical DUT, wherein the optical signal is substantially unpolarized upon entering the optical DUT. The method performed by the processor may include various steps, aspects, and features of embodiments of the PDL/G characterization method disclosed herein. For example, and referring to the system 200 of Fig. 2, the method can include a step of controlling a polarization controller 204 to receive the optical signal 212 from the optical DUT 202 and vary an SOP of the optical signal 212 over a plurality of sampled SOP conditions to produce a respective plurality of SOP-varied optical signals 218. The method can also include a step of controlling a polarization-analysis and detection apparatus 206 to perform a polarization-analysis and detection operation on the plurality of SOP-varied optical signals 218 to acquire a respective plurality of detected signal sets $230_1$, $230_2$, each detected signal set $230_1$, $230_2$ including at least one polarization-analyzed detected signal. The method can further include a step of determining, as the PDL/G of the optical DUT 202, a PER parameter representative of a ratio of maximum to minimum optical power levels measured among the polarization-analyzed detected signals of the plurality of detected signal sets $230_1$, $230_2$.

In accordance with another aspect, there is provided a computer device including a processor and a non-transitory computer readable storage medium operatively coupled to the processor and having stored thereon computer readable instructions that, when executed by a processor, cause the processor to perform various steps of the PDL/G characterization method disclosed herein. Fig. 2 depicts an example of a computer device 208 that includes a processor 232 and a non-transitory computer readable storage medium 234 (also referred to above as a memory) operably connected to the processor 232.

In the present description, similar features in the drawings have been given similar reference numerals. To avoid cluttering certain figures, some elements may not be indicated if they were already identified in a preceding figure. The elements of the drawings are not necessarily depicted to scale since emphasis is placed on clearly illustrating the elements and structures of the present embodiments. Positional descriptors indicating the location and/or orientation of one element with respect to another element are used herein for ease and clarity of description. Unless otherwise indicated, these positional descriptors should be taken in the context of the figures and should not be considered limiting. In particular, positional descriptors are intended to encompass different orientations in the use or operation of the present embodiments, in addition to the orientations exemplified in the figures. Furthermore, when a first element is referred to as being "on", "above", "below", "over", or "under" a second element, the first element can be either directly or indirectly on, above, below, over, or under the second element, respectively, such that one or multiple intervening elements may be disposed between the first element and the second element.

The terms "a", "an", and "one" are defined herein to mean "at least one", that is, these terms do not exclude a plural number of elements, unless stated otherwise.

The term "or" is defined herein to mean "and/or", unless stated otherwise.

Terms such as "substantially", "generally", and "about", which modify a value, condition, or characteristic of a feature of an exemplary embodiment, should be understood to mean that the value, condition, or characteristic is defined within tolerances that are acceptable for the proper operation of this exemplary embodiment for its intended application and/or that fall within an acceptable range of experimental error. In particular, the term "about" generally refers to a range of numbers that one skilled in the art would consider equivalent to the stated value (e.g., having the same or an equivalent function or result). In some instances, the term "about" means a variation of $\pm 10\%$ of the stated value. It is noted that all numeric values used herein are assumed to be modified by the term "about", unless stated otherwise. The term "between" is used herein to refer to a range of numbers or values defined by endpoints and is intended to include both endpoints, unless stated otherwise.

The term "based on" as used herein is intended to mean "based at least in part on", whether directly or indirectly, and to encompass both "based solely on" and "based partly on". In particular, the term "based on" may also be understood as meaning "from", "depending on", "representative of", "indicative of", "associated with", "relating to", and the like.

The terms "match", "matching", and "matched" refer herein to a condition in which two elements are either the same or within some predetermined tolerance of each other. That is, these terms are meant to encompass not only "exactly" or "identically" matching the two elements, but also "substantially", "approximately", or "subjectively" matching the two elements, as well as providing a higher or best match among a plurality of matching possibilities.

The terms "connected" and "coupled", and derivatives and variants thereof, refer herein to any connection or coupling, either direct or indirect, between two or more elements, unless stated otherwise. For example, the connection or coupling between the elements may be mechanical, optical, electrical, magnetic, thermal, chemical, logical, fluidic, operational, or any combination thereof.

The term "concurrently" refers herein to two or more processes that occur during coincident or overlapping time periods. The term "concurrently" does not necessarily imply complete synchronicity and encompasses various scenarios including time-coincident or simultaneous occurrence of two processes; occurrence of a first process that both begins and ends during the duration of a second process; and occurrence of a first process that begins during the duration of a second process, but ends after completion of the second process.

In the present description, the term "measured" when referring to a quantity or parameter is intended to mean that the quantity or parameter can be measured either directly or indirectly. In the case of indirect measurement, the quantity or parameter can be derived, retrieved, inferred or otherwise determined from directly measured data.

Numerous modifications could be made to the embodiments described above without departing from the scope of the appended claims.

**Claims**

1. A method (100) of characterizing a polarization-dependent loss or gain (PDL/G) of an optical device under test (DUT) (202) from an optical signal (212) having passed through the optical DUT (202), wherein the optical signal (212) is substantially unpolarized upon entering the optical DUT (202), the method (100) comprising:

   varying (102) a state of polarization (SOP) of the optical signal (212) over a plurality of sampled SOP conditions to produce a respective plurality of SOP-varied optical signals (218);
   performing (104) a polarization-analysis and detection operation on the plurality of SOP-varied optical signals (218) to acquire a respective plurality of detected signal sets, each detected signal set comprising at least one polarization-analyzed detected signal ($230_1$, $230_2$; 246); and
   determining (106), as the PDL/G of the optical DUT (202), a polarization extinction ratio (PER) parameter representative of a ratio of maximum to minimum optical power levels measured among the polarization-analyzed detected signals ($230_1$, $230_2$; 246) of the plurality of detected signal sets.

2. The method (100) of claim 1, wherein the optical DUT (202) comprises an optical communication link with a plurality of optical components distributed therealong, wherein the optical communication link is preferably an optical fiber link.

3. The method (100) of claim 1 or 2, wherein:

   the polarization-analysis and detection operation comprises, for each SOP-varied optical signal (218):

splitting, with a polarizing beam splitter (220), the SOP-varied optical signal (218) into a first polarization-analyzed signal component ($224_1$) having a first analyzed SOP condition and a second polarization-analyzed signal component ($224_2$) having a second analyzed SOP condition different from the first analyzed SOP condition, wherein the first analyzed SOP condition and the second analyzed SOP condition preferably correspond to two mutually orthogonal SOPs;

detecting, using a first detection channel ($228_1$) of a dual-channel optical detector (222), the first polarization-analyzed signal component ($224_1$) as a first one of the at least one polarization-analyzed detected signal ($230_1$) of the respective detected signal set; and

detecting, using a second detection channel ($228_2$) of the dual-channel optical detector (222), the second polarization-analyzed signal component ($224_2$) as a second one of the at least one polarization-analyzed detected signal ($230_2$) of the respective detected signal set; and

the PER parameter is determined from the plurality of first polarization-analyzed detected signals ($230_1$) and the plurality of second polarization-analyzed detected signals ($230_2$).

4. The method (100) of claim 3, wherein determining (106) the PER parameter comprises:

computing a plurality of polarization-analyzed power ratio signals using the plurality of detected signal sets, the plurality of polarization-analyzed power ratio signals comprising a plurality of first power ratio signals and/or a plurality of second power ratio signals, wherein each first power ratio signal corresponds to a power ratio of the first polarization-analyzed detected signal ($230_1$) to the second polarization-analyzed detected signal ($230_2$) of the respective detected signal set, and wherein each second power ratio signal corresponds to a power ratio of the second polarization-analyzed detected signal ($230_2$) to the first polarization-analyzed detected signal ($230_1$) of the respective detected signal set;

identifying at least one extremum power ratio signal from the plurality of polarization-analyzed power ratio signals; and

determining the PER parameter from the at least one extremum power ratio signal.

5. The method (100) of claim 3, wherein determining (106) the PER parameter comprises:

computing a plurality of transmittance power ratio signals using the plurality of detected signal sets, the plurality of transmittance power ratio signals comprising a plurality of first power ratio signals and/or a plurality of second power ratio signals, wherein each first power ratio signal corresponds to a ratio of the first polarization-analyzed detected signal ($230_1$) to the sum of the first polarization-analyzed detected signal ($230_1$) and the second polarization-analyzed detected signal ($230_2$) of the respective detected signal set, and wherein each second power ratio signal corresponds to a ratio of the second polarization-analyzed detected signal ($230_2$) to the sum of the first polarization-analyzed detected signal ($230_1$) and the second polarization-analyzed detected signal ($230_2$) of the respective detected signal set;

identifying at least one extremum power ratio signal from the plurality of transmittance power ratio signals; and

determining the PER parameter from the at least one extremum power ratio signal.

6. The method (100) of any one of claims 1 to 5, wherein:

the polarization-analyzed detected signals ($230_1$, $230_2$; 246) correspond to polarization-analyzed optical power spectra measured over a detection spectral range; and

the PER parameter is determined as a PER spectrum from the polarization-analyzed optical power spectra on a wavelength-by-wavelength basis for a number of wavelengths within the detection spectral range, wherein a magnitude of the PER spectrum at a given one of the wavelengths is representative of a ratio of maximum to minimum optical power levels detected among the polarization-analyzed optical power spectra at the given wavelength.

7. A system (200) for characterizing a polarization-dependent loss or gain (PDL/G) of an optical device under test (DUT) (202) from an optical signal (212) having passed through the optical DUT (202), wherein the optical signal (212) is substantially unpolarized upon entering the optical DUT (202), the system (200) comprising:

a polarization controller (204) configured to receive the optical signal (212) from the optical DUT (202) and vary a state of polarization (SOP) of the optical signal (212) over a plurality of sampled SOP conditions to produce a respective plurality of SOP-varied optical signals (218);

a polarization-analysis and detection apparatus (206) configured to acquire, from the plurality of SOP-varied optical signals (218), a respective plurality of detected signal sets, each detected signal set comprising at least one polarization-analyzed detected signal ($230_1$, $230_2$; 246); and

a computer device (208) operatively coupled to the polarization-analysis and detection apparatus (206), the computer device comprising a processor (232) and a computer readable storage medium (234) having stored thereon computer readable instructions that, when executed by the processor (232), cause the processor (232) to determine, as the PDL/G of the optical DUT (202), a polarization extinction ratio (PER) parameter representative of a ratio of maximum to minimum optical power levels measured among the polarization-analyzed detected signals ($230_1$, $230_2$; 246) of the plurality of detected signal sets.

8. The system (200) of claim 7, further comprising a light source (214) configured to generate the optical signal (212) in the substantially unpolarized state for injection into the optical DUT (202), wherein the light source (214) is configured to generate the optical signal (212) as a polarization- and wavelength-division-multiplexed (PWDM) signal having a spectral bandwidth lying within a wavelength band ranging from about 1250 nm to about 1650 nm.

9. The system (200) of claim 7 or 8, wherein:

the polarization-analysis and detection apparatus (206) comprises:

a polarizing beam splitter (220) configured to split each SOP-varied optical signal (218) into a first polarization-analyzed signal component ($224_1$) having a first analyzed SOP condition and a second polarization-analyzed signal component ($224_2$) having a second analyzed SOP condition different from the first analyzed SOP condition, wherein the first analyzed SOP condition and the second analyzed SOP condition preferably correspond to two mutually orthogonal SOPs; and
a dual-channel optical detector (222) comprising:

a first detection channel ($228_1$) configured to detect the first polarization-analyzed signal component ($224_1$) associated with each SOP-varied optical signal (218) as a first one of the at least one polarization-analyzed detected signal ($230_1$) of the respective detected signal set, thereby acquiring a plurality of first polarization-analyzed detected signals ($230_1$); and
a second detection channel (228z) configured to detect the second polarization-analyzed signal component ($224_2$) associated with each SOP-varied optical signal (218) as a second one of the at least one polarization-analyzed detected signal ($230_2$) of the respective detected signal set, thereby acquiring a plurality of second polarization-analyzed detected signals ($230_2$); and

the processor (232) is configured to determine the PER parameter from the plurality of first polarization-analyzed detected signals ($230_1$) and the plurality of second polarization-analyzed detected signals (230z).

10. The system (200) of claim 9, wherein the processor (232) is configured to determine the PER parameter by:

computing a plurality of polarization-analyzed power ratio signals using the plurality of detected signal sets, the plurality of polarization-analyzed power ratio signals comprising a plurality of first power ratio signals and/or a plurality of second power ratio signals, wherein each first power ratio signal corresponds to a power ratio of the first polarization-analyzed detected signal ($230_1$) to the second polarization-analyzed detected signal ($230_2$) of the respective detected signal set, and wherein each second power ratio signal corresponds to a power ratio of the second polarization-analyzed detected signal ($230_2$) to the first polarization-analyzed detected signal ($230_1$) of the respective detected signal set;
identifying at least one extremum power ratio signal from the plurality of polarization-analyzed power ratio signals; and
determining the PER parameter from the at least one extremum power ratio signal.

11. The system (200) of claim 9, wherein the processor (232) is configured to determine the PER parameter by:

computing a plurality of transmittance power ratio signals using the plurality of detected signal sets, the plurality of transmittance power ratio signals comprising a plurality of first power ratio signals and/or a plurality of second power ratio signals, wherein each first power ratio signal corresponds to a ratio of the first polarization-analyzed detected signal ($230_1$) to the sum of the first polarization-analyzed detected signal ($230_1$) and the second polarization-analyzed detected signal ($230_2$) of the respective detected signal set, and wherein each second power ratio signal corresponds to a ratio of the second polarization-analyzed detected signal ($230_2$) to the sum of the first polarization-analyzed detected signal ($230_1$) and the second polarization-analyzed detected signal ($230_2$) of the respective detected signal set;

identifying at least one extremum power ratio signal from the plurality of transmittance power ratio signals; and

determining the PER parameter from the at least one extremum power ratio signal.

12. The system (200) of any one of claims 7 to 11, wherein:

the polarization-analysis and detection apparatus (206) comprises:

a non-polarizing beam splitter (236) configured to split each SOP-varied optical signal (218) into a first signal component ($240_1$) and a second signal component ($240_2$);

a polarizer (238) configured to produce, from the first signal component ($240_1$) associated with each SOP-varied optical signal (208), a polarization-analyzed signal component (244) having an analyzed SOP condition; and

a dual-channel optical detector (222) comprising:

a first detection channel ($228_1$) configured to detect the polarization-analyzed signal component (244) associated with each SOP-varied optical signal (218) as a single one of the at least one polarization-analyzed detected signal (246) of the respective detected signal set; and

a second detection channel (228z) configured to detect the second signal component associated ($240_2$) with each SOP-varied optical signal (218) as a non-polarization-analyzed detected signal (248) of the respective detected signal set; and

the processor (232) is configured to determine the PER parameter by:

normalizing, in each detected signal set, the single polarization-analyzed detected signal (246) using the non-polarization-analyzed detected signal (248), thereby producing a plurality of normalized polarization-analyzed detected signals;

identifying a maximum ratio signal and a minimum ratio signal from the plurality of polarization-analyzed power ratio signals; and

determining the PER parameter from the maximum ratio signal and the minimum ratio signal.

13. The system (200) of any one of claims 7 to 12, wherein the polarization-analysis and detection apparatus (206) is configured to acquire the plurality of detected signal sets in a spectrally resolved manner.

14. The system (200) of claim 13, wherein:

the polarization-analysis and detection apparatus (206) is configured to acquire the polarization-analyzed detected signals ($230_1$, $230_2$, 246) as polarization-analyzed optical power spectra over a detection spectral range; and

the processor (232) is configured to determine the PER parameter as a PER spectrum from the polarization-analyzed optical power spectra on a wavelength-by-wavelength basis for a number of wavelengths within the detection spectral range, wherein a magnitude of the PER spectrum at a given one of the wavelengths is representative of a ratio of maximum to minimum optical power levels detected among the polarization-analyzed optical power spectra at the given wavelength.

15. A computer program comprising instructions that, when executed by a processor (232), cause the processor (232) to perform a method of characterizing a polarization-dependent loss or gain (PDL/G) of an optical device under test (DUT) (202) from an optical signal (212) having passed through the optical DUT (202), wherein the optical signal (212) is substantially unpolarized upon entering the optical DUT (202), the method comprising:

controlling a polarization controller (204) to receive the optical signal (212) from the optical DUT (202) and vary a state of polarization (SOP) of the optical signal (212) over a plurality of sampled SOP conditions to produce a respective plurality of SOP-varied optical signals (218);

controlling a polarization-analysis and detection apparatus (206) to perform a polarization-analysis and detection operation on the plurality of SOP-varied optical signals (218) to acquire a respective plurality of detected signal sets, each detected signal set comprising at least one polarization-analyzed detected signal ($230_1$, $230_2$; 246);

and

determining, as the PDL/G of the optical DUT, a polarization extinction ratio (PER) parameter representative of a ratio of maximum to minimum optical power levels measured among the polarization-analyzed detected signals ($230_1$, $230_2$; 246) of the plurality of detected signal sets.

100

Start

Varying a state of polarization (SOP) of the optical signal over a plurality of sampled SOP conditions to produce a respective plurality of SOP-varied optical signals ——102

Performing a polarization-analysis and detection operation on the plurality of SOP-varied optical signals to acquire a respective plurality of detected signal sets, each detected signal set comprising at least one polarization-analyzed detected signal ——104

Determining, as the PDL/G of the optical DUT, a polarization extinction ratio parameter representative of a ratio of maximum to minimum optical power levels measured among the polarization-analyzed detected signals of the plurality of detected signal sets ——106

End

FIG. 1

FIG. 2

FIG. 3

FIG. 4

200

254

206

250

238

252

208

234

232

218

204

212

210

202

212

216

214

FIG. 5

EP 4 418 569 A1

FIG. 6

Europäisches
Patentamt

European
Patent Office

Office européen
des brevets

# EUROPEAN SEARCH REPORT

Application Number

EP 24 15 5835

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 136 485 A1 (ACTERNA LLC [US]) 23 December 2009 (2009-12-23) * claim 1 * ----- | 1-15 | INV. H04B10/079 G01M11/00 H04B10/2569 |
| X | JP 2004 004037 A (AGILENT TECHNOLOGIES INC) 8 January 2004 (2004-01-08) * Page 2 of translation * ----- | 1-15 | |

TECHNICAL FIELDS
SEARCHED      (IPC)

H04B
G01M

The present search report has been drawn up for all claims

| Place of search | Date of completion of the search | Examiner |
|---|---|---|
| Munich | 31 May 2024 | Inan, Beril |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 5835

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2024

| Patent document cited in search report | Publication date | Patent family member(s) | Publication date |
|---|---|---|---|
| EP 2136485 A1 | 23-12-2009 | AT E554541 T1 | 15-05-2012 |
| | | CA 2669249 A1 | 19-12-2009 |
| | | EP 2136485 A1 | 23-12-2009 |
| | | ES 2384487 T3 | 05-07-2012 |
| | | US 2009316153 A1 | 24-12-2009 |
| JP 2004004037 A | 08-01-2004 | DE 10306045 A1 | 13-11-2003 |
| | | JP 2004004037 A | 08-01-2004 |
| | | US 2003202171 A1 | 30-10-2003 |

EPO FORM P0459

For more details about this annex : see Official Journal of the European Patent Office, No. 12/82